(19) Europäisches Patentamt
European Patent Office
Office européen des brevets

(11) EP 2 952 480 A1

(12) EUROPEAN PATENT APPLICATION

(43) Date of publication:
09.12.2015 Bulletin 2015/50

(51) Int Cl.:
*C01G 23/047* (2006.01) *C09C 1/36* (2006.01)

(21) Application number: 15168130.1

(22) Date of filing: 19.05.2015

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: 23.05.2014 JP 2014107241

(71) Applicant: **Shin-Etsu Chemical Co., Ltd.**
**Tokyo (JP)**

(72) Inventors:
- **Masuda, Kohei**
  **Annaka-shi, Gunma (JP)**
- **Yoshikawa, Yuji**
  **Annaka-shi, Gunma (JP)**
- **Furudate, Manabu**
  **Kamisu-shi, Ibaraki (JP)**
- **Inoue, Tomohiro**
  **Kamisu-shi, Ibaraki (JP)**

(74) Representative: **Ter Meer Steinmeister & Partner**
**Patentanwälte mbB**
**Nymphenburger Straße 4**
**80335 München (DE)**

# (54) TITANIUM OXIDE SOLID SOLUTION DISPERSION AND COATING COMPOSITION

(57) A dispersion in organic solvent of a core-shell type tetragonal titanium oxide solid solution in which a core is composed of a tetragonal titanium oxide microparticle containing at least one element ($M^0$) selected from the group consisting of gallium, vanadium, niobium, tantalum, zirconium, aluminum, and indium in the solid solution and containing tin in the solid solution, and a shell surrounding the core is composed of silicon oxide. The core-shell type solid solution has a particle diameter ($D_{50}$) corresponding to 50% in volume-based cumulative particle size distribution as measured by a dynamic light scattering method using a laser beam of up to 50 nm, the amount of the tin component dissolved in the solid solution, expressed in molar ratio (Ti/Sn) of titanium to tin, is in the range from 10 to 1,000, and the total amount of the ($M^0$) component dissolved in the solid solution, expressed in molar ratio (Ti/$M^0$) of titanium to ($M^0$), is in the range from 10 to 1,000.



Printed by Jouve, 75001 PARIS (FR)

## Description

### TECHNICAL FIELD

The present invention relates to dispersions of titanium oxide microparticles. More particularly, the invention relates to a dispersion in an organic solvent of a core-shell type tetragonal titanium oxide solid solution having a core composed of tetragonal titanium oxide microparticles containing at least one element selected from the group consisting of gallium, vanadium, niobium, tantalum, zirconium, and aluminum in solid solution and further containing tin in solid solution and a shell composed of silicon oxide, the dispersion being characterized by retaining excellent dispersibility even when mixed into a paint in a high concentration, and enabling to form a coat which is free of cissing or whitening, is provided with a high refractive index, is free of crystal defects even under a low oxygen partial pressure and is insusceptible to color change toward blue (namely, bluing). The invention relates also to a coating composition.

### BACKGROUND ART

A titanium oxide microparticle dispersion in organic solvent can be used as a UV (ultraviolet) absorber or a refractive index-imparting agent in coating compositions. Such coating compositions are expected to be applied to a variety of uses such as high-weatherability paints and refractive index controlling paints, and are desired to be easily obtained at lower cost and with higher performance.

Patent Document 1 (Japanese Patent No. 5255270) discloses a titanium oxide microparticle dispersion which can be mixed into a coating composition. In the patent document, there is proposed a contrivance to ensure that photocatalytic activity is suppressed and mixing of the dispersion into a coating composition will not change the color tone of the coat formed from the coating composition. In recent years, among optical lenses, those which are smaller in thickness and lower in price have been accepted more favorably. In order to render lenses thinner, it is necessary to enhance the refractive index of the material for the lenses. In response to this requirement, there has been an increasing demand for a paint with a high refractive index for suppressing interference fringes. In optical lenses, further, it is favored to provide an inorganic vapor-deposited layer. It is known that lamination of an inorganic vapor-deposited layer tends to cause a change in color tone of the lens with time. In order to restrain this change in color tone, the invention in the patent document adopts an addition of potassium.

### Citation List

Patent Document 1: Japanese Patent No. 5255270

### SUMMARY OF THE INVENTION

### TECHNICAL PROBLEM

As a result of the present inventors' investigations, it has been found that the titanium oxide dispersion provided according to Patent Document 1 (Japanese Patent No. 5255270) is not excellent in shelf stability. Particularly, in recent years, inexpensive optical lenses have been demanded, and the stability of titanium oxide dispersions and paints using the same is an important factor. If a dispersion with enhanced stability is obtained, cold storage expenditures for distribution and stock of the dispersion can be cut down. Besides, if a paint with increased stability is provided, the process cost for a hard coating treatment of optical lenses can be reduced.

It is an object of the present invention to provide a titanium oxide dispersion which is excellent in shelf stability and transparency. More particularly, it is an object of the present invention to provide a titanium oxide dispersion which, when used in a coating composition or paint, ensures that a change in color tone of a coat toward blue with time (bluing) can be inhibited from occurring after lamination of an inorganic vapor-deposited layer, a high refractive index can be obtained, and a high mar resistance can also be attained. It is another object of the present invention to provide a coating composition which contains the titanium oxide dispersion.

### SOLUTION TO PROBLEM

In order to solve the above-mentioned problems, the present inventors made extensive and intensive studies and, as a result, found titanium oxide microparticle dispersions in organic solvent which have good properties. On the basis of the finding, the inventors have reached at the present invention.

According to an aspect of the present invention, there is provided the following titanium oxide solid solution dispersion and coating composition.

[1] A dispersion in organic solvent of a core-shell type tetragonal titanium oxide solid solution in which a core is composed of a tetragonal titanium oxide microparticle containing at least one element ($M^0$) selected from the group consisting of gallium, vanadium, niobium, tantalum, zirconium, aluminum, and indium in the solid solution and containing tin in the solid solution, and a shell surrounding the core is composed of silicon oxide,
wherein the core-shell type solid solution has a particle diameter ($D_{50}$) corresponding to 50% in volume-based cumulative particle size distribution as measured by a dynamic light scattering method using a laser beam of up to 50 nm,
the amount of the tin component dissolved in the solid solution, expressed in molar ratio (Ti/Sn) of titanium to tin, is in the range from 10 to 1,000, and
the total amount of the ($M^0$) component dissolved in the solid solution, expressed in molar ratio (Ti/$M^0$) of titanium to ($M^0$), is in the range from 10 to 1,000.
[2] The dispersion in organic solvent of the core-shell type tetragonal titanium oxide solid solution according as described in the above paragraph [1],
wherein the weight ratio of silicon oxide constituting the shell to the total weight of the core-shell type tetragonal titanium oxide solid solution is in the range from 5% to 50% by weight.
[3] The dispersion in organic solvent of the core-shell type tetragonal titanium oxide solid solution as described in the above paragraph [1] or [2], including a silicon compound represented by the following general formula (1):

$$R^1_pR^2_qR^3_rSi(OR^4)_{4-p-q-r} \qquad (1)$$

wherein $R^1$ is a hydrogen atom, a substituted or unsubstituted monovalent hydrocarbon group having 1 to 20 carbon atoms, or a diorganosiloxy group of up to 50 silicon atoms, $R^2$, $R^3$, and $R^4$ are each independently an alkyl group having 1 to 6 carbon atoms, p is an integer of 1 to 3, q is an integer of 0, 1 or 2, r is an integer of 0, 1 or 2, and p + q + r is an integer of 1 to 3 or a (partial) hydrolyzate condensate thereof,
wherein the weight ratio of the silicon compound or (partial) hydrolyzate condensate thereof to the total weight of the core-shell type tetragonal titanium oxide solid solution is in the range from 5% to 50% by weight.
[4] A coating composition including the dispersion in organic solvent of the core-shell type tetragonal titanium oxide solid solution as described in any of the above paragraphs [1] to [3].

## ADVANTAGEOUS EFFECTS OF THE INVENTION

According to the described aspect of the present invention, when the aforementioned dispersion is mixed into a coating composition, it is possible to obtain a coat with a high refractive index without adversely affecting the physical properties of the coat (such as mar resistance, absence of cissing, and transparency). Also, it is possible to inhibit change of color of the coat toward blue with the lapse of time (so-called bluing).

## BRIEF DESCRIPTION OF THE DRAWINGS

FIG. 1 illustrates steps (D) and (E) in producing a titanium oxide solid solution dispersion in an organic solvent in Example 1 which will be described later, by way of example;
FIG. 2 is a graph showing the relation between particle diameter and frequency in the case of measurement of a particle diameter corresponding to 50% in volume-based cumulative particle size distribution, for a titanium oxide solid solution obtained in Example 1; and
FIG. 3 is a graph showing the relation between titanium oxide content of a coat and refractive index of the coat.

## DESCRIPTION OF THE PREFERRED EMBODIMENTS

The titanium oxide microparticle dispersion of the present invention will be described in detail below.

### Titanium oxide microparticles

Titanium oxide microparticles used in the present invention are microparticles of a core-shell type tetragonal titanium oxide solid solution wherein a core is composed of tetragonal titanium oxide microparticles containing at least one element ($M^0$) selected from the group consisting of gallium, vanadium, niobium, tantalum, zirconium, and aluminum in solid solution and further containing tin in solid solution, and a shell on the outside of the core is composed of silicon oxide. The tin component as a solute of the solid solution may be any one that is derived from a tin compound. Examples

of the tin compound include tin chalcogenides such as tin oxide, and tin sulfide, of which preferred is tin oxide. Other tin slats may also be used. Examples of the other tin salts include: tin halides such as tin fluoride, tin chloride, tin bromide, and tin iodide; tin pseudo-halides such as tin cyanide, and tin isothiocyanide; and mineral acid salts of tin such as tin nitrate, tin sulfate, and tin phosphate. Of these tin compounds, tin chloride is preferably used in view of its high stability and availability. In addition, while tin in the tin salts may have a valence of 2 to 4, it is particularly preferable to use quadrivalent tin. The component ($M^0$) as a solute in the solid solution may be any of those derived from ($M^0$) compounds, examples of which include ($M^0$) chalcogenides.

In the case where tin and ($M^0$) are dissolved in tetragonal titanium oxide in solid solution, the amount of the tin component dissolved in the solid solution, expressed in molar ratio (Ti/Sn) of titanium to tin, is preferably in the range from 10 to 1,000, more preferably from 20 to 200. The amount of the ($M^0$) component dissolved in the solid solution, expressed in molar ratio ($Ti/M^0$) of titanium to the ($M^0$), is preferably in the range from 10 to 1,000, more preferably from 20 to 200. If the molar ratios Ti/Sn and $Ti/M^0$ of the tin component and the ($M^0$) component contained in the solid solution to titanium are below 10, light absorption in the visible region due to tin and ($M^0$) becomes undesirably conspicuous. If the molar ratio Ti/Sn and $Ti/M^0$ are above 1,000, on the other hand, photocatalytic activity may be deactivated insufficiently, which naturally is undesirable.

As for the type of solid solution of tin component and ($M^0$) component, the solid solution may be either substitutional or interstitial. The substitutional type refers to a type of solid solution attained when tin and ($M^0$) are substitutingly located in the sites of titanium (IV) ions of titanium oxide. The interstitial type refers to a type of solid solution attained when tin and ($M^0$) are located in spaces in the crystal lattice of tin oxide. In the interstitial type, F-centers causing coloration are liable to be formed. In addition, since the symmetry in the surroundings of the metallic ions is poor, the Franck-Condon factor of vibronic transition at the metallic ions is increased, so that visible light is likely absorbed in the solid solution.

To the tetragonal titanium oxide containing tin and ($M^0$) in solid solution that is used in the present invention, other kinds of elements may further be added, as required. The element which can be added is at least one element selected from the group consisting of the group 13 elements, the group 14 elements (exclusive of carbon), the first, second and third series of transition elements, and lanthanoids.

The titanium oxide microparticle dispersion in organic solvent of the present invention is preferably a dispersion in an organic solvent of core-shell type titanium oxide solid solution microparticles in which a core is composed of tetragonal titanium oxide containing tin and ($M^0$) in solid solution as aforementioned and a shell on the outside of the core is composed of silicon oxide. In the case where the silicon oxide shell is not formed, there may occur a conspicuous development of a photocatalytic ability and a lowering in dispersibility. In the core-shell type tetragonal titanium oxide solid solution in which the core is composed of the tetragonal titanium oxide microparticles containing tin and ($M^0$) in solid solution and the shell on the outside of the core is composed of silicon oxide as aforementioned, the proportion of silicon oxide forming the shell is 5% to 50% by weight, preferably 10% to 40% by weight, and more preferably 15% to 30% by weight, based on the total amount of the solid solution. If the proportion of silicon oxide is less than 5% by weight, the formation of the shell is insufficient. If the proportion exceeds 50% by weight, on the other hand, aggregation of the particles may be promoted, making the dispersion opaque.

The silicon oxide shell is preferably formed through a sol-gel reaction of a quadrifunctional silicon compound. Examples of the quadrifunctional silicon compound which can be used for such a purpose include: tetraalkoxysilanes such as tetramethoxysilane, tetraethoxysilane, tetra(n-propoxy)silane, tetra(i-propoxy)silane, and tetra(n-butoxy)silane; and silicates and water glass, which are (partial) hydrolyzate condensates of the just-mentioned tetraalkoxysilanes. The sol-gel reaction can be carried out while using, if necessary, a catalyst for the hydrolytic condensation of such silicon compounds. A detailed method for carrying out the sol-gel reaction will be described in detail later, in the part dealing with a method for preparation. The aforementioned shell proportion of silicon oxide may be attained either through a stoichiometric control based on the amount of the quadrifunctional silicon compound to be used or through a kinetic control based on the reaction conditions and the kind of the catalyst. Where complete hydrolytic condensation is adopted, the control is a stoichiometric control. The silicon oxide component for constituting the shell can be analyzed by common analytical means such as an analysis of a weight change across the reaction, and $^{29}Si$ nuclear magnetic resonance spectroscopy.

<u>Titanium oxide microparticle dispersion</u>

The titanium oxide microparticles dispersion of the present invention is a dispersion of the aforementioned core-shell type titanium oxide microparticles in a dispersion medium. Examples of the dispersion medium which can be used in the present invention include: hydrocarbons having 5 to 30 carbon atoms, such as pentane, hexane, heptane, octane, nonane, decane, undecane, dodecane, tridecane, tetradecane, pentadecane, hexadecane, heptadecane, octadecane, nonadecane, icosane, eicosane, docosane, triicosane, tetraicosane, pentaicosane, hexaicosane, heptaicosane, octaicosane, nonaicosane, triacontane, benzene, toluene, o-xylene, m-xylene, p-xylene, and mixtures containing

these hydrocarbons, such as petroleum ether, kerosene, ligroin, and nujol; monohydric and polyhydric alcohols such as methanol, ethanol, 1-propanol, 2-propanol, cyclopentanol, diacetone alcohol, ethylene glycol, propylene glycol, β-thiadiglycol, butylene glycol, and glycerin; ethers such as diethyl ether, dipropyl ether, cyclopentyl methyl ether, ethylene glycol dimethyl ether, diethylene glycol dimethyl ether, triethylene glycol dimethyl ether, ethylene glycol monomethyl ether, ethylene glycol monoethyl ether, ethylene glycol monopropyl ether, ethylene glycol monobutyl ether, propylene glycol monomethyl ether, propylene glycol monoethyl ether, propylene glycol monopropyl ether, propylene glycol monobutyl ether, butylene glycol monomethyl ether, butylene glycol monoethyl ether, butylene glycol monopropyl ether, and butylene glycol monobutyl ether; esters such as methyl formate, ethyl formate, propyl formate, butyl formate, methyl acetate, ethyl acetate, propyl acetate, butyl acetate, methyl propionate, ethyl propionate, propyl propionate, butyl propionate, methyl butyrate, ethyl butyrate, propyl butyrate, butyl butyrate, methyl benzoate, ethyl benzoate, propyl benzoate, butyl benzoate, dimethyl oxalate, diethyl oxalate, dipropyl oxalate, dibutyl oxalate, dimethyl malonate, diethyl malonate, dipropyl malonate, dibutyl malonate, ethylene glycol diformate, ethylene glycol diacetate, ethylene glycol dipropionate, ethylene glycol dibutyrate, propylene glycol diacetate, propylene glycol dipropionate, propylene glycol dibutyrate, ethylene glycol methyl ether acetate, propylene glycol methyl ether acetate, butylene glycol monomethyl ether acetate, ethylene glycol ethyl ether acetate, propylene glycol ethyl ether acetate, and butylene glycol monoethyl ether acetate; ketones such as acetone, diacetone alcohol, diethyl ketone, methyl ethyl ketone, methyl isobutyl ketone, methyl normal-butyl ketone, dibutyl ketone, cyclopentanone, cyclohexanone, cycloheptanone, and cyclooctanone; amides such as dimethylformamide, dimethylacetamide, tetraacetylethylenediamide, tetraacetylhexamethylenetetramide, and N,N-dimethylhexamethylenediamine diacetate; and water. Particularly, it is preferable that the dispersion medium includes at least one dispersion medium selected from the group consisting of water, methanol, ethanol, 1-propanol (IPA), butanol, diacetone alcohol (DAA), propylene glycol monomethyl ether (PGM), and propylene glycol monomethyl ether acetate (PGMAc).

The titanium oxide microparticle dispersion of the present invention preferably contains an organosilicon compound represented by the general formula (1) set forth below and at least one (partial) hydrolyzate condensate of the compound. The organosilicon compound and the (partial) hydrolyzate condensate of the compound are added to, or contained in the state of a composite through a reaction in, the core-shell type titanium oxide solid solution microparticles in an amount of preferably 0.1% to 50% by weight, more preferably 0.2% to 40% by weight, and still more preferably 0.5% to 30% by weight. The organosilicon component can be analyzed by common analytic means such as an analysis of a weight change across a reaction, or $^{29}$Si nuclear magnetic resonance spectroscopy. Particularly, liquid $^{29}$Si nuclear magnetic resonance spectroscopy is preferable because it is thereby possible to simultaneously analyze, qualitatively and quantitatively, the silicon oxide component forming the aforementioned shell.

$$R^1{}_pR^2{}_qR^3{}_rSi(OR^4)_{4-p-q-r} \qquad (1)$$

In the formula, $R^1$ is a hydrogen atom, a substituted or unsubstituted monovalent hydrocarbon group having 1 to 20 carbon atoms in which a plurality of substituent groups may be linked together, or a diorganosiloxy group of up to 50 silicon atoms. Preferably, $R^1$ is a hydrogen atom or an alkyl group having 1 to 20 carbon atoms; an alkenyl group having 2 to 20 carbon atoms; an aryl group having 6 to 20 carbon atoms; an alkyl group having 1 to 20 carbon atoms substituted with (meth)acryl group, (meth)acryloxy group, epoxy group, halogen atom, mercapto group, amino group, aminoalkylamino group or isocyanate group; an isocyanurate group in which isocyanate groups of a plurality of isocyanate group-substituted hydrocarbon groups are linked together; or a (poly)dimethylsiloxy group of up to 50 silicon atoms; $R^2$, $R^3$ and $R^4$ are each independently an alkyl group having up to 6 carbon atoms; and p is an integer of 1 to 3, q is an integer of 0 to 2, and r is an integer of 0 to 2, with p + q + r being an integer of 1 to 3.

Specific examples of the silane compound represented by the general formula (1) wherein p = 1 and q = r = 0 include: hydrogentrimethoxysilane, hydrogentriethoxysilane, methyltrimethoxysilane, methyltriethoxysilane, methyltriisopropoxysilane, ethyltrimethoxysilane, ethyltriethoxysilane, ethyltriisopropoxysilane, propyltrimethoxysilane, propyltriethoxysilane, propyltriisopropoxysilane, phenyltrimethoxysilane, vinyltrimethoxysilane, allyltrimethoxysilane, γ-methacryloxypropyltrimethoxysilane, γ-methacryloxypropyltriethoxysilane, γ-acryloxypropyltrimethoxysilane, γ-glycidoxypropyltrimethoxysilane, γ-glycidoxypropyltriethoxysilane, β-(3,4-epoxycyclohexyl)ethyltrimethoxysilane, γ-chloropropyltrimethoxysilane, 3,3,3-trifluoropropyltrimethoxysilane, 3,3,3-trifluoropropyltriethoxysilane, perfluorooctylethyltrimethoxysilane, γ-mercaptopropyltrimethoxysilane, γ-aminopropyltrimethoxysilane, γ-aminopropyltriethoxysilane, N-(2-aminoethyl)aminopropyltrimethoxysilane, γ-isocyanatopropyltrimethoxysilane,γ -isocyanatopropyltriethoxysilane, tris(3-trimethoxysilylpropyl) isocyanurate in which isocyanate groups are linked together, tris(3-triethoxysilylpropyl) isocyanurate, a partial hydrolyzate condensate of methyltrimethoxysilane (trade names: "KC-89S" and "X-40-9220," produced by Shin-Etsu Chemical Co., Ltd.), and a partial hydrolyzate condensate of methyltrimethoxysilane and γ-glycidoxypropyltrimethoxysilane (trade name: "X-41-1056," produced by Shin-Etsu Chemical Co., Ltd.).

Specific examples of the silane compound represented by the general formula (1) wherein p = 1 and q = r = 0 and wherein $R^1$ is a polydimethylsiloxane, include compounds represented by the general formula (2) set forth below.

In the general formula (2), n is preferably an integer of 0 to 50, more preferably an integer of 5 to 40, and still more preferably an integer of 10 to 30. If n exceeds 50, the property as a silicone oil is strengthened, thereby possibly limiting the solubility of the surface-treated organosol in various resins, which is undesirable. A compound of the general formula (2) wherein an average structure corresponds to n = 30 is available from Shin-Etsu Chemical Co., Ltd. under the trade name "X-24-9822." It is noted that Me represents methyl group.

General Formula (2):

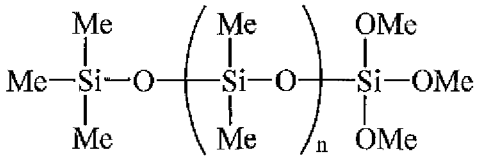

(2)

Specific examples of the silane compound represented by the above general formula (1) wherein p = 1, q = 1 and r = 0, include methylhydrogendimethoxysilane, methylhydrogendiethoxysilane, dimethyldimethoxysilane, dimethyldiethoxysilane, methylethyldimethoxysilane, diethyldimethoxysilane, diethyldiethoxysilane, methylpropyldimethoxysilane, methylpropyldiethoxysilane, diisopropyldimethoxysilane, phenylmethyldimethoxysilane, vinylmethyldimethoxysilane, γ-glycidoxypropylmethyldimethoxysilane, γ-glycidoxypropylmethyldiethoxysilane, β-(3,4-epoxycyclohexyl)ethylmethyldimethoxysilane, γ-methacryloxypropylmethyldimethoxysilane, γ-methacryloxypropylmethyldiethoxysilane, γ-mercaptopropylmethyldimethoxysilane, γ-aminopropylmethyldiethoxysilane, and N-(2-aminoethyl)aminopropylmethyldimethoxysilane.

Specific examples of the silane compound represented by the above general formula (1) wherein p = 1, q = 1 and r = 1 include trimethylmethoxysilane, trimethylethoxysilane, triethylmethoxysilane, n-propyldimethylmethoxysilane, n-propyldiethylmethoxysilane, iso-propyldimethylmethoxysilane, iso-propyldiethylmethoxysilane, propyldimethylethoxysilane, n-butyldimethylmethoxysilane, n-butyldimethylethoxysilane, n-hexyldimethylmethoxysilane, n-hexyldimethylethoxysilane, n-pentyldimethylmethoxysilane, n-pentyldimethylethoxysilane, n-hexyldimethylmethoxysilane, n-hexyldimethylethoxysilane, n-decyldimethylmethoxysilane, and n-decyldimethylethoxysilane.

It is preferable that the titanium oxide microparticle dispersion of the present invention is detected both in the region of -40 to -70 ppm and in the region of -80 to -130 ppm in $^{29}Si$ nuclear magnetic resonance. The nuclear magnetic resonance spectroscopy may be carried out either on a solid-phase basis or on a liquid-phase basis. It is to be noted, however, that in the solid nuclear magnetic resonance spectroscopy, it is necessary to dry and solidify the sample as a pretreatment, and, therefore, the analytical result does not necessarily reflect the bonded state of silicon in the sample. Accordingly, it is preferable to analyze the titanium oxide microparticle dispersion in a liquid state by the nuclear magnetic resonance spectroscopy. In the liquid $^{29}Si$ nuclear magnetic resonance spectroscopy, measurement is preferably conducted while using silicon-free material for a sample tube and a probe. Example of the silicon-free material which can be used in the nuclear magnetic resonance spectroscopy include polytetrafluoroethylene (Teflon™). In the liquid $^{29}Si$ nuclear magnetic resonance spectroscopy, an appropriate relaxing agent can be used for shortening the measurement time. As the relaxing agent, there can be used known reagents (for example, Organometallics, 2008, Vol. 27, No. 4, pp. 500-502 and references therein). Especially, tris(acetylacetonato)chromium(III) complex is excellent for use as the relaxing agent here, since it is excellent in solubility in water and organic solvents and does not cause aggregation of titanium oxide. For instance, a solution obtained by dissolving tris(acetylacetonato)chromium(III) in hexadeuterioacetone (acetone-$d_6$) in a concentration of about 1 $mol \cdot dm^{-3}$ may be used as the relaxing agent, in an amount of several drops, whereby both a relaxing effect and a deuterium locking effect can be obtained in a preferable manner. Besides, the surface conditions of titanium oxide can be examined by similarly measuring the nuclear magnetic resonance spectrum after the intended composition is prepared.

In the measurement by $^{29}Si$ nuclear magnetic resonance spectroscopy, a change in the condensed state of the functionality of the silicon compound can be examined. In regard of the functionality, trifunctional T units and quadrifunctional Q units can be distinguished from each other. Specifically, the T unit is one of the components derived from the organosilicon compound represented by the above general formula (1), whereas the Q unit is detected as arising from the silicon oxide component forming the shell of the core-shell type titanium oxide microparticles. The change in the condensed state can be achieved by examining the proportions of (T0) to (T3) and (Q0) to (Q4) set forth below. The condensation degrees are in the order of T3 > T2 > T1 > T0 and in the order of Q4 > Q3 > Q2 > Q1 > Q0, and the detection magnetic fields are often on the higher magnetic field side in the order of Q4 > Q3 > Q2 > Q1 > Q0 > T3 > T2 > T1 > T0. The proportions of the functionalities and the condensed states can be estimated from signal intensities. In this case, the $^{29}Si$ nucleus has a negative gyromagnetic ratio ($\gamma_B$), so that the nuclear Overhauser effect is reversed, thereby suppressing a nuclear magnetism relaxation present around a resonating nucleus. In view of this, it is preferable

to adopt such measurement conditions that the negative nuclear Overhauser effect would not become conspicuous. In the case of pulse-Fourier transform nuclear magnetic resonance, it is possible to solve this problem by use of an appropriate pulse sequence. For instance, it is preferable to use an off-resonance type pulse sequence.

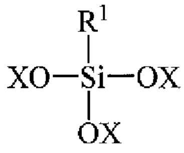 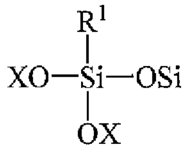 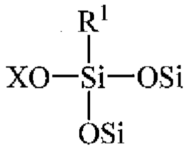 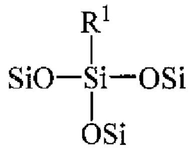

(T0) (T1) (T2) (T3)

(where $R^1$ is as defined above, X represents a hydrogen atom or an alkyl group having 1 to 4 carbon atoms.)

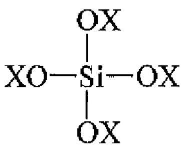 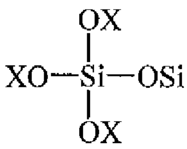 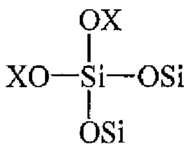 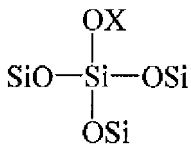 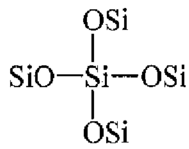

(Q0) (Q1) (Q2) (Q3) (Q4)

(where X represents a hydrogen atom or an alkyl group having 1 to 4 carbon atoms.)

A resonance magnetic field can be expressed as the difference thereof from the resonance magnetic field of resonance of the $^{29}$Si nucleus of tetramethylsilane taken as a reference, in the unit of parts per million (ppm). In accordance with this notation, in many cases, T0 is detected in the range of -40 ppm to -46 ppm, preferably -42 ppm to -45 ppm, T1 is detected in the range of -46 ppm to -54 ppm, preferably -48 ppm to -52 ppm, T2 is detected in the range of -54 ppm to -60 ppm, preferably -56 ppm to -58 ppm, and T3 is detected in the range of -60 ppm to -70 ppm, preferably -62 ppm to -68 ppm. In many cases, Q0 is detected in the range of -80 ppm to -90 ppm, preferably -85 ppm to -90 ppm, Q1 is detected in the range of -90 ppm to -110 ppm, preferably -95 ppm to -105 ppm, Q2 is detected in the range of -100 ppm to -115 ppm, Q3 is detected in the range of -100 ppm to -115 ppm, preferably -105 ppm to -115 ppm, and Q4 is detected in the range of -110 ppm to -130 ppm, preferably -110 ppm to -120 ppm. The distinction between T and Q and the distinction between the condensed states are preferably achieved by examining the spin coupling state between the $^{1}$H nucleus and $^{29}$Si nucleus. The negative value on the notation basis indicates that the resonance magnetic field has the difference on the higher magnetic field side as compared with the reference line. The width of the resonance line is dependent on the magnetic field strength of the nuclear magnetic resonance system used for the measurement, and the aforementioned preferable ranges of resonance lines are exemplary values obtained by applying a magnetic field of 11.75 T (tesla). The magnetic field which can be used for the nuclear magnetic resonance system is in the range of 5 T to 20 T, preferably 8 T to 15 T, and further preferably 10 T to 13 T. If the magnetic field is below 5 T, the S/N ratio is so small that the measurement may be difficult to achieve. If the magnetic field exceeds 20 T, the resonance system is so large-scaled that the measurement may be difficult to perform. The magnetic field strength, the resonance line width and the signal intensity can naturally be inferred by those skilled in the art, from the information just set forth.

The solids concentration of the core-shell type titanium oxide solid solution microparticle dispersion of the present invention, inclusive of the component derived from the organosilicon compound represented by the general formula (1) mentioned above, is preferably 0.1% to 30% by weight, more preferably 0.5% to 25% by weight, and further preferably 3% to 20% by weight. If the solids concentration is up to 0.1% by weight, a large amount of the dispersion may be needed to provide an effective amount of the desired component at the time of adding the dispersion to a paint, which is undesirable. If the solids concentration is more than 30% by weight, on the other hand, the dispersion may gel to loose fluidity. A dilute dispersion with a solids concentration around 1% by weight can be utilized as a thinner for a paint resin. On the other hand, a concentrated dispersion (assumed to be agent A) with a solids concentration of about 20% by weight can be added, in a required amount, to an existing paint (assumed to be agent B), so that the agent A and the agent B can be used as a two-pack type paint based on mixing of the agent A and the agent B. Whether the dispersion is to be used as a thinner or as a component of a two-pack type paint may be selected appropriately in accordance with the individual situation.

Coating composition containing the titanium oxide microparticle dispersion

The core-shell type titanium oxide solid solution microparticle dispersion (assumed to be agent A) of the present invention can be used as a paint additive. As a paint (assumed to be agent B), there can be used, for example, silicone coating compositions, acrylsilicone coating compositions, acrylic coating compositions, melamine coating compositions, urethane coating compositions, acrylurethane coating compositions, epoxy coating compositions, paraffin coating compositions, and alkyd coating compositions. An application of the dispersion (agent A) to a silicone-based coating composition (agent B) is particularly preferable, since excellent miscibility and dispersibility are ensured in this case. The proportion of the agent A added to the agent B, in terms of solids content ratio (weight of solid matter in agent A/weight of solid matter in agent B), is preferably 1% to 70% by weight, more preferably 4% to 60% by weight, and still more preferably 6% to 50% by weight. If the proportion of addition is less than 1% by weight, the effect of the addition may be insufficient. If the proportion of addition exceeds 70% by weight, the addition may influence other physical properties of the resultant coat than anticipated. The addition of the dispersion in a proportion of about 1% to 20% by weight may be applied to the use as a weathering-resistant paint, whereas the addition of the dispersion in a proportion of about 20% to 70% by weight may be applied to the use as a high-refractive-index paint (for optical lenses). The addition amount of the dispersion can be adjusted appropriately in accordance with the purpose of addition. The solids or solid matter of the present invention refers to the component left upon removal of volatile components (such as solvent). The solids content (or amount of solid matter) can be determined from the change in weight brought about when the sample (agent A or agent B) is subjected to forced drying and solidifying. Now, a silicone coating composition will be described in detail below, as an example of the agent B applicable with the dispersion (agent A) of the present invention.

Silicone coating composition

A silicone coating composition contains (I) a silicone resin obtained by (co)hydrolytic condensation of at least one selected from a specified alkoxysilane and a partial hydrolyzate condensate thereof, (II) a curing catalyst, (III) a solvent, and (IV) colloidal silica.

Component (I)

Component (I) is a silicone resin obtained by (co)hydrolytic condensation of at least one selected from among alkoxysilanes represented by the following general formula (3):

$$(R^{01})_m(R^{02})_nSi(OR^{03})_{4-m-n} \qquad (3)$$

wherein $R^{01}$ and $R^{02}$ are each independently a hydrogen atom or a substituted or unsubstituted monovalent hydrocarbon group, of which substituent groups may be linked together, $R^{03}$ is an alkyl group having 1 to 3 carbon atoms, m and n are each independently 0 or 1, and m + n is 0, 1 or 2, or the following general formula (4):

$$Y[Si(R^{04})_m(R^{05})_n(OR^{06})_{3-m-n}]_2 \qquad (4)$$

wherein Y is a divalent organic group selected from the group consisting of alkylenes of 1 to 10 carbon atoms, perfluoroalkylenes of 1 to 10 carbon atoms, di(ethylene)perfluoroalkylenes of 1 to 10 carbon atoms, phenylene, and biphenylene, $R^{04}$ and $R^{05}$ are each independently a hydrogen atom or a substituted or unsubstituted monovalent hydrocarbon group, of which substituent groups may be linked together, $R^{06}$ is an alkyl group having 1 to 3 carbon atoms, m and n are each independently 0 or 1, and m + n is 0, 1 or 2 and partial hydrolyzate condensates of at least one of the alkoxysilanes.

In the above formula (3), $R^{01}$ and $R^{02}$ are each a hydrogen atom or a substituted or unsubstituted monovalent hydrocarbon group having preferably 1 to 12 carbon atoms, particularly 1 to 8 carbon atoms, examples of which include hydrogen atom; alkyl groups such as methyl, ethyl, propyl, butyl, pentyl, hexyl, heptyl, and octyl; cycloalkyl groups such as cyclopentyl, and cyclohexyl; alkenyl groups such as vinyl, and allyl; aryl groups such as phenyl; halogen-substituted hydrocarbon groups such as chloromethyl, γ-chloropropyl, and 3,3',3''-trifluoropropyl; and (meth)acryloxy, epoxy, mercapto, amino, aminoalkylamino, and isocyanate-substituted hydrocarbon groups, such as γ-methacryloxypropyl, γ-glycidoxypropyl, 3,4-epoxycyclohexylethyl, γ-mercaptopropyl, γ-aminopropyl, and γ-isocyanatepropyl. The examples further include isocyanurate groups formed when isocyanate groups of a plurality of isocyanate-substituted hydrocarbon groups are linked together. Of these groups, particularly, alkyl groups are preferable for uses where mar resistance and weathering resistance are required, and epoxy, (meth)acryloxy, and isocyanurate-substituted hydrocarbon groups are preferred for applications where toughness and dyeability are demanded.

In addition, $R^{03}$ is an alkyl group having 1 to 3 carbon atoms, examples of which include methyl, ethyl, n-propyl, and i-propyl. Among these groups, methyl and ethyl groups are preferred in view of their high reactivity for hydrolytic

condensation, high vapor pressure of the alcohol $R^{03}OH$ produced therefrom, and ease of distilling-away.

An example of the above formula (3) wherein m = 0 and n = 0 is (a-1) a tetraalkoxysilane represented by the general formula: $Si(OR^{03})_4$ or a partial hydrolyzate condensate thereof.

Specific examples of such a tetraalkoxysilane or partial hydrolyzate condensate thereof include tetramethoxysilane, tetraethoxysilane, tetraisopropoxysilane, tetrabutoxysilane, partial hydrolyzate condensates of tetramethoxysilane (trade name: "M Silicate 51" produced by Tama Chemicals Co., Ltd., trade name: "MSI 51" produced by Colcoat Co., Ltd., trade name: "MS 51"/"MS 56" produced by Mitsubishi Chemical Corporation), partial hydrolyzate condensates of tetraethoxysilane (trade name: "Silicate 35," "Silicate 45" produced by Tama Chemicals Co., Ltd., trade name: "ESI 40"/"ESI 48" produced by Colcoat Co., Ltd.), and partial hydrolyzate condensates of tetramethoxysilane and tetraethoxysilane (trade name: "FR-3" produced by Tama Chemicals Co., Ltd., trade name: "EMSi 48" produced by Colcoat Co., Ltd.).

An example of the above formula (3) wherein m = 1 and n = 0 or wherein m = 0 and n = 1 is (a-2) a trialkoxysilane represented by the general formula: $R^{01}Si(OR^{03})_3$ or $R^{02}Si(OR^{03})_3$ or a partial hydrolyzate condensate thereof.

Specific examples of such a trialkoxysilane or partial hydrolyzate condensate thereof include hydrogentrimethoxysilane, hydrogentriethoxysilane, methyltrimethoxysilane, methyltriethoxysilane, methyltriisopropoxysilane, ethyltrimethoxysilane, ethyltriethoxysilane, ethyltriisopropoxysilane, propyltrimethoxysilane, propyltriethoxysilane, propyltriisopropoxysilane, phenyltrimethoxysilane, vinyltrimethoxysilane, allyltrimethoxysilane, γ-methacryloxypropyltrimethoxysilane, γ-methacryloxypropyltriethoxysilane, γ-acryloxypropyltrimethoxysilane, γ-glycidoxypropyltrimethoxysilane, γ-glycidoxypropyltriethoxysilane, β-(3,4-epoxycyclohexyl)ethyltrimethoxysilane, γ-chloropropyltrimethoxysilane, 3,3,3-trifluoropropyltrimethoxysilane, 3,3,3-trifluoropropyltriethoxysilane, perfluorooctylethyltrimethoxysilane, γ-mercaptopropyltrimethoxysilane, γ-aminopropyltrimethoxysilane, γ-aminopropyltriethoxysilane, N-(2-aminoethyl)aminopropyltrimethoxysilane, γ-isocyanatopropyltrimethoxysilane, γ-isocyanatopropyltriethoxysilane, tris(3-trimethoxysilylpropyl) isocyanurate in which isocyanate groups are linked together, tris(3-triethoxysilylpropyl) isocyanurate, partial hydrolyzate condensates of methyltrimethoxysilane (trade names: "KC-89S" and "X-40-9220," produced by Shin-Etsu Chemical Co., Ltd.), and a partial hydrolyzate condensate of methyltrimethoxysilane and γ-glycidoxypropyltrimethoxysilane (trade name: "X-41-1056," produced by Shin-Etsu Chemical Co., Ltd.).

An example of the above formula (3) wherein m = 1 and n = 1 is (a-3) a dialkoxysilane represented by the general formula: $(R^{01})(R^{02})Si(OR^{03})$ or a partial hydrolyzate condensate thereof.

Specific examples of such a dialkoxysilane or partial hydrolyzate condensate thereof include methylhydrogendimethoxysilane, methylhydrogendiethoxysilane, dimethyldimethoxysilane, dimethyldiethoxysilane, methylethyldimethoxysilane, diethyldimethoxysilane, diethyldiethoxysilane, methylpropyldimethoxysilane, methylpropyldiethoxysilane, diisopropyldimethoxysilane, phenylmethyldimethoxysilane, vinylmethyldimethoxysilane, γ-glycidoxypropylmethyldimethoxysilane, γ-glycidoxypropylmethyldiethoxysilane, β-(3,4-epoxycyclohexyl)ethylmethyldimethoxysilane, γ-methacryloxypropylmethyldimethoxysilane, γ-methacryloxypropylmethyldiethoxysilane, γ-mercaptopropylmethyldimethoxysilane, γ-aminopropylmethyldiethoxysilane, and N-(2-aminoethyl)aminopropylmethyldimethoxysilane.

In the above general formula (4), $R^{04}$ and $R^{05}$ are each a hydrogen atom or a substituted or unsubstituted monovalent hydrocarbon group having preferably 1 to 12 carbon atoms, particularly 1 to 8 carbon atoms, examples of which include hydrogen atom; alkyl groups such as methyl, ethyl, propyl, butyl, pentyl, hexyl, heptyl, and octyl; cycloalkyl groups such as cyclopentyl, and cyclohexyl; alkenyl groups such as vinyl, and allyl; aryl groups such as phenyl; halogen-substituted hydrocarbon groups such as chloromethyl, γ-chloropropyl, and 3,3',3"-trifluoropropyl; and (meth)acryloxy, epoxy, mercapto, amino, and isocyanate-substituted hydrocarbon groups such as γ-methacryloxypropyl, γ-glycidoxypropyl, 3,4-epoxycyclohexylethyl, γ-mercaptopropyl, γ-aminopropyl, and γ-isocyanatepropyl. The examples further include isocyanurate groups formed when isocyanate groups of a plurality of isocyanate-substituted hydrocarbon groups are linked together. Of these groups, particularly, alkyl groups are preferable for uses where mar resistance and weathering resistance are required, and epoxy, (meth)acryloxy and isocyanurate-substituted hydrocarbon groups are preferred for applications where toughness and dyeing properties are demanded.

In addition, $R^{06}$ is an alkyl group having 1 o 3 carbon atoms, examples of which include methyl, ethyl, n-propyl, and i-propyl. Among these groups, methyl and ethyl groups are preferred in view of their high reactivity for hydrolytic condensation, high vapor pressure of the alcohol $R^{06}$ OH produced therefrom, and ease of distilling-away.

An example of the group of the above formula (4) wherein m = 0 and n = 0 is (a-4) an ω-bis(trialkoxysilyl)alkane, ω-bis(trialkoxysilyl)perfluoroalkane, ω-bis(trialkoxysilyl)partial fluoroalkane, o-, m-, or p-bis(trialkoxysilyl)benzene, or bis(trialkoxysilyl)biphenyl represented by the general formula: $Y[Si(OR)^{06}]_3]_2$ or partial hydrolyzate condensates thereof.

Besides, Y is preferably a partially fluoro-substituted alkylene group, and, from the viewpoint of synthesis, ω-diethylene(perfluoroalkylene) is easily available. Specific examples of such alkylene groups include that in which Y is ω-bisethylene[tetrakis(difluoromethylene)] and $R^{06}$ is methyl group.

The silicone resin of Component (I) may be prepared by using one of the aforementioned (a-1), (a-2), (a-3) and (a-4) alone or by use of at least two of them in arbitrary proportions. In order to enhance shelf stability, mar resistance, and crack resistance, it is preferable to use 0 Si mol% to 50 Si mol% of (a-1), 50 Si mol% to 100 Si mol% of (a-2), 0 Si

mol% to 10 Si mol% of (a-3), based on 100 Si mol% in total of (a-1), (a-2), (a-3), and (a-4). It is more preferable to use 0 Si mol% to 30 Si mol% of (a-1), 70 Si mol% to 100 Si mol% of (a-2), 0 Si mol% to 10 Si mol% of (a-3), and 0 Si mol% to 5 Si mol% of (a-4). In this case, if the amount of (a-2) used as a main component is less than 50 Si mol%, the crosslink density of the resin is so low that the curability of the resin is low and, further, the hardness of the cured film tends to be low. If (a-1) is used in an amount in excess of 50 Si mol%, on the other hand, the crosslink density of the resin is too high, so that the toughness of the coat obtained is low and it may be difficult to obviate cracking of the coat. Besides, by using (a-4) in a small amount of up to 5 Si mol%, it is possible to change surface properties of the coat obtained, such as to control the angle of contact with water, to impart mar resistance of the coat, or to enhance pencil hardness of the coat.

It is to be noted that the term "Si mol%" refers to percentage based on the total Si moles. By the Si mole for a monomer, it is meant that its molecular weight is 1 mole, and for a dimer, its average molecular weight divided by 2 is 1 mole.

In order to prepare the silicone resin of Component (I), it is sufficient to put one or more of (a-1), (a-2), (a-3), and (a-4) to (co)hydrolytic condensation by a known method. For instance, one alone or at least two in mixture of the alkoxysilanes or their partial hydrolyzate condensates of (a-1), (a-2), (a-3), and (a-4) are put to (co)hydrolysis with water at a pH of 1 to 7.5, preferably 2 to 7. In this instance, water containing metallic oxide microparticles dispersed therein, such as silica sol, may be used. For adjustment into this pH range or for acceleration of hydrolysis, there may be used organic and inorganic acids such as hydrogen fluoride, hydrochloric acid, nitric acid, formic acid, acetic acid, propionic acid, oxalic acid, citric acid, maleic acid, benzoic acid, malonic acid, glutaric acid, glycolic acid, methanesulfonic acid, and toluenesulfonic acid, or a solid acid catalyst such as a cation exchange resin provided with carboxyl groups or sulfonic groups at a surface thereof, or water-dispersed metallic oxide microparticles such as acidic water-dispersed silica sol, as a catalyst. Besides, the hydrolysis may be carried out in the co-existence of a dispersion of metallic oxide microparticles in water or an organic solvent, such as silica sol.

In this hydrolysis, the amount of water used may be in the range of 20 to 3,000 parts by weight, based on a total of 100 parts by weight of the alkoxysilanes and/or their partial hydrolyzate condensates of (a-1), (a-2), (a-3), and (a-4). It is to be noted here, however, that the use of an excess of water may cause not only a lowering in apparatus efficiency but also a lowering in coating properties and drying properties under the influence of remaining water in the finally obtained composition. Furthermore, in order to enhance shelf stability as well as mar resistance and crack resistance, the amount of water used is preferably 50 to 150 parts by weight. If the amount of water is too small, the weight average molecular weight of the resulting silicone resin as measured by gel permeation chromatography (GPC) analysis with polystyrene standards may fail to increase into the optimal region which will be described later. When the amount of water is too large, the proportion of that unit in the resulting silicone resin which is represented by the unit formula: $R'SiO_{(3-p)/2}(CX)_p$ (where R' is $R^{01}$ or $R^{02}$, X is a hydrogen atom or $R^{03}$, and where $R^{01}$, $R^{02}$, and $R^{03}$ are the same as above-mentioned, and p is an integer of 0 to 3) and derived from the material (a-2) may fail to reach the optimal range for maintaining the crack resistance of the coat.

The hydrolysis may be carried out by adding dropwise or pouring water into the alkoxysilanes or partial hydrolyzate condensates thereof, or by reversely adding dropwise or pouring the alkoxysilanes or partial hydrolyzate condensates thereof into water. In this case, the reaction system may contain an organic solvent, but it is preferable that the reaction system does not contain any organic solvent. As the reaction system contains more organic solvent, the weight average molecular weight of the resulting silicone resin as measured by GPC analysis with polystyrene standards tends to decrease.

In order to obtain the silicone resin of Component (I), it is necessary to effect condensation after the hydrolysis. It is sufficient for the condensation to be carried out in succession to the hydrolysis, ordinarily under the condition where the liquid temperature is at normal temperature or under heating at a temperature of up to 100°C. If the temperature is above 100°C, gelation may take place. In addition, the condensation can be accelerated by a method in which the alcohols produced upon the hydrolysis are distilled away at or above 80°C and at normal pressure or a reduced pressure. Furthermore, in order to accelerate the condensation, a condensation catalyst such as basic compounds, acidic compounds, and metal chelate compounds may be added. Before or during the condensation step, an organic solvent may be added for the purpose of controlling the degree of progress of condensation and the concentration. Besides, a dispersion of metallic oxide microparticles in water or an organic solvent, such as silica sol, and/or the agent A component of the present invention (titanium oxide microparticle dispersion in organic solvent) may be added. In general, as condensation of a silicone resin progresses, the molecular weight of the resin increases, whereby its solubility in water or the alcohol produced is gradually lowered. In view of this, the organic solvent to be added is preferably a comparatively highly polar organic solvent which dissolves the silicone resin well and has a boiling point of at least 80°C. Specific examples of such organic solvent include: alcohols such as isopropyl alcohol, n-butanol, isobutanol, t-butanol, and diacetone alcohol; ketones such as methyl propyl ketone, diethyl ketone, methyl isobutyl ketone, cyclohexanone, and diacetone alcohol; ethers such as dipropyl ether, dibutyl ether, anisole, dioxane, ethylene glycol monoethyl ether, ethylene glycol monobutyl ether, propylene glycol monomethyl ether, and propylene glycol monomethyl ether acetate; and esters such as propyl acetate, butyl acetate, and cyclohexyl acetate. In this case, the amount of the organic solvent to be used

may be an amount sufficient for dissolving the silicone resin, and is often in the range of 100% to 1,000% by weight based on the amount of the solid matter in the silicone resin. If the amount of the organic solvent is less than 100% by weight, phase separation may occur during storage at low temperature, which is undesirable from the viewpoint of quality. If the amount of the organic solvent exceeds 1,000% by weight, on the other hand, the concentration of the resin as an effective ingredient in the paint composition is lowered, making it difficult to form a favorable coat, which is undesirable.

The weight average molecular weight of the silicone resin obtained by this condensation, as measured by GPC analysis with polystyrene standards, is preferably at least 1,500, more preferably in the range of 1,500 to 50,000, and still more preferably 2,000 to 20,000. When the molecular weight is below this range, the coat obtained tends to be low in toughness and susceptible to cracking. When the molecular weight is too high, on the other hand, the coat tends to be lower in hardness, and whitening of the coat may be brought about due to phase separation of the resin in the coat.

In obtaining the silicone resin of Component (I) by (co)hydrolytic condensation of the aforementioned alkoxysilanes and/or partial hydrolyzate condensates thereof, the titanium oxide microparticle dispersion in organic solvent as the agent A component mentioned above may be added to the alkoxysilanes and/or partial hydrolyzate condensates thereof to perform (co)hydrolytic condensation. Besides, in the case of using colloidal silica of Component (IV) which will be described later, the colloidal silica may be added to the (co)hydrolytic condensation system.

After the condensation, concentration (enriching) may be performed, as required, and solvent replacement can be conducted. In this case, the concentration (enriching) may be carried out by any of the existing techniques such as distillation, reverse osmosis, freeze drying, and vacuum drying.

The solvent replacement may be achieved by conducting azeotropic distillation, reverse osmosis, ultrafiltration or the like after addition of other solvent. Examples of the other solvent include: alcohols such as methanol, ethanol, isopropanol, n-butanol, isobutanol, stearyl alcohol, oleyl alcohol, and lauryl alcohol; aromatic hydrocarbons such as toluene and xylene; esters such as ethyl acetate and butyl acetate; ketones such as methyl ethyl ketone, and methyl isobutyl ketone; glycol ethers such as ethyl cellosolve, and propylene glycol monomethyl ether; saturated hydrocarbons such as n-hexane; and mixtures of them.

Furthermore, the pH of the aforementioned silicone resin may be adjusted to a value of 3 to 7. As a pH adjustor, any of the existing acidic compounds and basic compounds may be used. Examples of the compounds include organic acids and inorganic acids, such as hydrogen fluoride, hydrochloric acid, nitric acid, formic acid, acetic acid, propionic acid, oxalic acid, citric acid, maleic acid, benzoic acid, malonic acid, glutaric acid, glycolic acid, methanesulfonic acid, and toluenesulfonic acid.

Component (II)

Component (II) is a curing catalyst for accelerating the reaction for condensation of condensable groups, such as silanol group and alkoxy group, contained in the silicone resin of Component (I). Examples of the curing catalyst as Component (II) include: basic compounds such as lithium hydroxide, sodium hydroxide, potassium hydroxide, sodium methylate, sodium propionate, potassium propionate, sodium acetate, potassium acetate, sodium formate, potassium formate, trimethylbenzylammonium hydroxide, tetramethylammonium hydroxide, tetramethylammonium acetate, n-hexylamine, tributylamine, diazabicycloundecene (DBU), and dicyandiamide; metal-containing compounds such as tetraisopropyl titanate, tetrabutyl titanate, titanium acetylacetonate, aluminum triisobutoxide, aluminum triisopropoxide, tris(acetylacetonato)aluminum, diisopropoxy(ethylacetoacetato)aluminum, aluminum perchlorate, aluminum chloride, cobalt octylate, cobalt acetylacetonate, iron acetylacetonate, tin acetylacetonate, dibutyltin octylate, and dibutyltin laurate; and acidic compounds such as p-toluenesulfonic acid, and trichloroacetic acid. Among these, particularly preferred are sodium propionate, sodium acetate, sodium formate, trimethylbenzylammonium hydroxide, tetramethylammonium hydroxide, tris(acetylacetonato)aluminum, and diisopropoxy(ethylacetoacetato)aluminum.

Furthermore, in order to maintain not only the curability and crack resistance but also shelf stability of the coating composition, a more suitable curing catalyst may be used, for example, compounds containing no aromatic group in its molecule, represented by the following general formula (5):

$$[(R^{07})(R^{08})(R^{09})(R^{10})M]^{+}\cdot X^{-} \qquad (5)$$

wherein $R^{07}$, $R^{08}$, $R^{09}$, and $R^{10}$ are each independently an alkyl group having 1 to 18 carbon atoms which may be halogen-substituted, such that the total of Taft-Dubois steric substituent constants Es of $R^{07}$, $R^{08}$, $R^{09}$, and $R^{10}$ is up to -0.5, M is an ammonium cation or phosphonium cation, $X^{-}$ is a halogen anion, hydroxide anion, or carboxylate anion having 1 to 4 carbon atoms.

Here, the Taft-Dubois steric substituent constant Es is a rate of esterification reaction of a substituted carboxylic acid under acidic conditions relative to methyl group $CH_3$ and represented by the following equation:

$$Es = \log(k/k_0)$$

wherein k is a rate of acidic esterification reaction of a substituted carboxylic acid under specific conditions and $k_0$ is a rate of acidic esterification reaction of methyl-substituted carboxylic acid under the same conditions (see J. Org. Chem., 45, 1164 (1980) and J. Org. Chem., 64, 7707 (1999)).

The Taft-Dubois steric substituent constant Es is a general index representing the steric bulkiness of a substituent group. For example, the value of constant Es is 0.00 for methyl, -0.08 for ethyl, -0.31 for n-propyl, and -0.31 for n-butyl, indicating that the lower the Es value, the more sterically bulky is the substituent group.

In the present invention, it is preferable that the total of constants Es of $R^{07}$, $R^{08}$, $R^{09}$, and $R^{10}$ in the formula (5) is up to -0.5. If the total of the Es values is above -0.5, a coating composition is lowered in shelf stability and forms a coat which can be cracked or whitened upon formation thereof or in a water resistance test and can become lower in adhesion, particularly water-resistant adhesion and boiling adhesion. In the case where the total of constants Es is above -0.5 (for example where $R^{07}$, $R^{08}$, $R^{09}$, and $R^{10}$ are all methyl), the corresponding curing catalyst represented by the formula (5) becomes higher in catalytic activity, but a coating composition obtained tends to be low in shelf stability and a coat thereof becomes so hygroscopic as to show defects upon a water resistance test. It is to be noted that the total of the Es values of $R^{07}$, $R^{08}$, $R^{09}$, and $R^{10}$ is preferably at least -3.2, particularly at least -2.8.

Examples of the alkyl groups having 1 to 18 carbon atoms, preferably 1 to 12 carbon atoms, which may be halogen-substituted, as $R^{07}$, $R^{08}$, $R^{09}$, and $R^{10}$ in the above formula (5) include: alkyl groups such as methyl, ethyl, propyl, butyl, pentyl, hexyl, heptyl, and octyl; cycloalkyl groups such as cyclopentyl, and cyclohexyl; and halogen-substituted hydrocarbon groups such as chloromethyl, $\gamma$-chloropropyl, and 3,3,3-trifluoropropyl.

In addition, M is an ammonium cation or phosphonium cation, and $X^-$ is a halogen anion, hydroxide anion or a carboxylate anion having 1 to 4 carbon atoms, preferably a hydroxide anion or acetate anion.

Specific examples of such a curing catalyst include: hydroxides such as tetra-n-propylammonium hydroxide, tetra-n-butylammonium hydroxide, tetra-n-pentylammonium hydroxide, tetra-n-hexylammonium hydroxide, tetracyclohexylammonium hydroxide, tetrakis(trifluoromethyl)ammonium hydroxide, trimethylcyclohexylammonium hydroxide, trimethyl(trifluoromethyl)ammonium hydroxide, trimethyl-t-butylammonium hydroxide, tetra-n-propylphosphonium hydroxide, tetra-n-butylphosphonium hydroxide, tetra-n-pentylphosphonium hydroxide, tetra-n-hexylphosphonium hydroxide, tetracyclohexylphosphonium hydroxide, tetrakis(trifluoromethyl)phosphonium hydroxide, trimethylcyclohexylphosphonium hydroxide, trimethyl(trifluoromethyl)phosphonium hydroxide, and trimethyl-t-butylphosphonium hydroxide; salts of these hydroxides with halogenic acids and with carboxylic acids of 1 to 4 carbon atoms. Among these compounds, preferred are tetrapropylammonium hydroxide, tetrapropylammonium acetate, tetrabutylammonium hydroxide, tetrabutylammonium acetate, tetrabutylphosphonium hydroxide, and tetrabutylphosphonium acetate. These may be used alone or in combination of two or more of them; further, these may be used in combination with the aforementioned known curing catalysts.

It is sufficient for Component (II) to be used in an effective amount for curing the silicone resin of Component (I), and is not particularly limited. To be more specific, the amount of Component (II) is preferably 0.0001% to 30% by weight, more preferably 0.001% to 10% by weight, based on the solids of the silicone resin. When the amount of Component (II) is less than 0.0001% by weight, insufficient cure and a lower hardness may result. If the amount is more than 30% by weight, the coat obtained may be susceptible to cracking and be low in water resistance.

Component (III)

Component (III) is a solvent, which is not specifically restricted so long as Components (I) and (II) above are soluble or dispersible therein. Preferably, a highly polar organic solvent is used as a main solvent. Specific examples of the organic solvent include: alcohols such as methanol, ethanol, isopropyl alcohol, n-butanol, isobutanol, t-butanol, and diacetone alcohol; ketones such as methyl propyl ketone, diethyl ketone, methyl isobutyl ketone, cyclohexanone, and diacetone alcohol; ethers such as dipropyl ether, dibutyl ether, anisole, dioxane, ethylene glycol monoethyl ether, ethylene glycol monobutyl ether, propylene glycol monomethyl ether, and propylene glycol monomethyl ether acetate; esters such as ethyl acetate, propyl acetate, butyl acetate, and cyclohexyl acetate. At least one selected from these solvents can be used either alone or as a mixture thereof.

Component (III) is preferably added in such an amount as to set the solids concentration of the silicone coating composition of the present invention to within the range of 1% to 30% by weight, particularly 5% to 25% by weight. If the amount is out of this range, a coat obtained by applying the composition and curing it may have defects. For instance, if the concentration is below the range, the coat is likely sagged, twisted or mottled, and it may be impossible to obtain the desired hardness and mar resistance. When the concentration is above the range, on the other hand, the coat may be susceptible to blushing, whitening or cracking.

Component (IV)

Component (IV) is colloidal silica, which may be added in an appropriate amount in the case where it is particularly desired to enhance hardness or mar resistance of a coat. The colloidal silica usable here is in a form in which nanosize silica having a particle diameter of about 5 nm to 50 nm is dispersed in a medium such as water and organic solvent to form a colloid. Thus, commercially available colloidal silicas of water-dispersed type or organic solvent-dispersed type can be used. Specific examples of them include Snowtex-O, OS, OL, produced by Nissan Chemical Industries, Ltd., and methanol silica sol. The addition amount of the colloidal silica is 0 to 100 parts by weight, preferably 5 to 100 parts by weight, particularly 5 to 50 parts by weight, based on 100 parts by weight of the solids of the silicone resin of Component (Q).

Other components

The silicone coating composition of the present invention may optionally be admixed with pH adjustor, leveling agent, thickening agent, pigment, dye, metallic oxide microparticles, metallic powder, antioxidant, UV absorber, UV stabilizer, heat ray reflectivity/absorptivity-imparting agent, flexibilizing agent, antistatic agent, stainproofing agent, and water repellency agent, in such ranges as not to adversely affect the purpose or advantageous effects of the present invention.

In order to ensure better shelf stability of the silicone coating composition of the present invention, it is recommendable to set the pH of the liquid to a value of preferably 2 to 7, more preferably 3 to 6. When the pH of the silicone coating composition is outside this range, storage stability may be lowered. In such a situation, the pH can be brought into the range by adding a pH adjustor. Where the pH is more acidic outside the range, a basic substance such as ammonia or ethylene diamine may be added for pH adjustment. When the pH of the silicone coating composition is more basic outside the range, an acidic substance such as hydrochloric acid, nitric acid, sulfuric acid and citric acid may be added to adjust the pH. However, the method for pH adjustment is not specifically restricted.

The silicone coating composition of the present invention can be obtained by mixing the Components (I) to (IV) above, and optionally other components, with each other in a conventional manner.

Method of preparing titanium oxide microparticle dispersion

There is no limitation to the method for preparing the titanium oxide microparticle dispersion of the present invention. While the titanium oxide microparticle dispersion can be prepared by a combination of known methods, it can be prepared, for example, through a process including Steps (A) to (E) above.

A method of preparing the titanium oxide microparticle dispersion preferably includes:

Step (A) of providing a metallic oxide water dispersion which contains at least titanium;
Step (B) of reacting the water dispersion with a silicon compound to obtain a reaction mixture;
Step (C) of diluting the reaction mixture formed through the reaction with an organic solvent, as required, to obtain a diluted dispersion;
Step (D) of concentrating either one of the diluted dispersion and the reaction mixture, as required, to obtain a concentrated dispersion; and
Step (E) of subjecting one of the concentrated dispersion, the diluted dispersion and the reaction mixture to solvent replacement using an organic solvent. Where it is desired that the dispersion medium of the dispersion is water, Steps (B) to (E) may not necessarily be conducted.

Step (A)

The metallic oxide microparticle water dispersion provided in Step (A) in the present invention is preferably a dispersion of inorganic oxide particles having a cumulative average particle diameter of 5 nm to 50 nm in a liquid dispersion medium such as water without aggregation.

The particle diameter in the metallic oxide microparticle water dispersion provided in Step (A) in the present invention can be measured by various methods. The range of the particle diameter in the present invention refers to the range of a particle diameter ($D_{50}$) corresponding to 50% in volume-based cumulative particle size distribution as measured by a dynamic light scattering method using a laser beam. It is noted, however, that the particle diameter can be measured by use of an electron microscopy, as supporting evidence. While the measurements obtained by these measuring methods are not dependent on the measuring apparatus, the measurement by the dynamic light scattering method can be conducted by using, for example, Nanotrac UPA-EX150 (produced by Nikkiso Co., Ltd.). On the other hand, the measurement by the electron microscopy can be performed by use of, for example, a transmission electron microscope

H-9500 (produced by Hitachi High-Technologies Corporation). For instance, in the case of adding the colloidal solution to a coating composition, transparency in the visible region is important, so that the cumulative average particle diameter of the dispersoid is preferably in the range of 5 nm to 50 nm, more preferably 5 nm to 45 nm, further preferably 10 nm to 40 nm, and particularly preferably 12 nm to 30 nm. When the cumulative average particle diameter of the dispersoid exceeds 50 nm, the particle diameter is greater than the wavelength of light in the visible region, and scattering may become conspicuous. If the cumulative average particle diameter is less than 5 nm, on the other hand, the total surface area of the dispersoid in the system is extremely large, so that it may be difficult to handle the colloidal solution.

Zeta potential ($\zeta$) of a colloidal solution is recognized as a value proportional to electrophoretic mobility in phoretic phenomenon of dispersoid particles, which is observed when an electric field is applied to a solid-liquid interface having an electrical double layer. The zeta potential can be measured by various methods, using an apparatus such as, for example, ELS-3000 (produced by Otsuka Electronics Co., Ltd.). In the case of such an organosol as in the present invention, the dielectric constant of an organic solvent varies in a wide range according to the solvent. Since the zeta potential is a function dependent on dielectric constant, dielectric constant measurement may be conducted in such a situation. The measurement of dielectric constant can be carried out using an apparatus such as, for example, Model-871 (produced by Nihon Rufuto Co., Ltd.). The zeta potential is often within the range of $-200\ mV < \zeta < 200\ mV$. The greater the absolute value of the zeta potential of a colloidal solution, more stable is the dispersion system of the colloidal solution. Accordingly, it is preferable that the absolute value ($|\zeta|$) of the zeta potential of the colloidal solution in the present invention is at least 3 mV, more preferably at least 10 mV, and further preferably at least 20 mV. When the absolute value ($|\zeta|$) of the zeta potential is less than 3 mV, the dispersoid of the colloidal solution may be insufficient in stability of dispersion. There is no specific upper limit set for the absolute value ($|\zeta|$) of the zeta potential, but, normally, there is some physical limit (about 200 mV).

The colloidal solution provided in Step (A) in the present invention is characterized by having water as the dispersion medium. Examples of the water which can be used here include fresh water such as city water, industrial water, well water, natural water, rain water, distilled water and ion-exchanged water, of which particularly preferred is ion-exchanged water. Ion-exchanged water can be produced by use of a pure water producing apparatus such as FW-10 produced by Organo Corporation and Direct-QUV3 produced by Merck Millipore Corporation. Besides, the dispersion medium may contain a monohydric alcohol freely miscible with water, in a step of preparing a water dispersion colloidal solution as will be described later.

The concentration of the colloidal solution provided in Step (A) in the present invention is preferably 1% to 35% by weight, more preferably 5% to 30% by weight, and still more preferably 10% to 25% by weight. A colloidal solution concentration of less than 1% by weight is not preferable because preparation efficiency may be poor in that case. A colloidal solution concentration of more than 35% by weight is unfavorable because gelation may occur, depending on such conditions as pH and temperature. The concentration is to be understood as the percentage of the weight of the dispersoid based on the total weight of the colloidal solution (the total weight of the dispersoid and the dispersion medium). The concentration can be obtained from the weight change when a fixed amount of the colloidal solution is weighed and the dispersion medium is removed by forced drying.

The colloidal solution used in the present invention is particularly preferably a colloidal solution containing core-shell microparticles in which a core is composed of one of, or a composite of two or more of, the oxides of the metallic elements mentioned above and a shell surrounding the core is composed of one of, or a composite of two or more of, the oxides of the metallic elements mentioned above. Examples of such a core-shell microparticle-containing colloidal solution include a colloidal solution containing core-shell microparticles in which a core is composed of a titanium oxide-$M^0$ oxide-tin oxide composite oxide and a shell surrounding the core is composed of silicon oxide, and a colloidal solution containing core-shell microparticles in which a core is composed of a titanium oxide-$M^0$ oxide-tin oxide composite oxide and a shell surrounding the core contains silicon oxide.

The silicon oxide-containing shell formed on the outside of the core of the tetragonal titanium oxide microparticles containing a foreign element dissolved therein contains silicon oxide as a main constituent, may contain other element or elements such as tin and aluminum, and may be formed by any technique. For instance, a shell composed of silicon oxide can be formed by hydrolytic condensation of a tetraalkoxysilane. As the tetraalkoxysilane, there may be used any of normally available ones such as tetramethoxysilane, tetraethoxysilane, tetra(n-propoxy)silane, tetra(i-propoxy)silane, and tetra(n-butoxy)silane. From the viewpoint of reactivity and safety, tetraethoxysilane is preferably used. Examples of such a usable tetraalkoxysilane include the commercially available KBE-04 (produced by Shin-Etsu Chemical Co., Ltd.). In addition, the hydrolytic condensation of the tetraalkoxysilane may be performed in water. In this case, a condensation catalyst such as ammonia, aluminum salts, organoaluminum, tin salts, and organotin may be used as required. Among these condensation catalyst usable here, ammonia is particularly preferable because it functions also as a dispersant for the core microparticles.

In the core-shell type tetragonal titanium oxide solid solution in which the core is composed of tetragonal titanium oxide microparticle containing a foreign element dissolved therein and the shell surrounding the core is composed of silicon oxide as aforementioned, the proportion of the silicon oxide constituting the shell based on the whole of the core-shell type tetragonal titanium oxide solid solution is 5% to 50% by weight, preferably 10% to 50% by weight, more preferably 20% to 45% by weight. When the proportion is less than 5% by weight, the shell is formed insufficiently. When the proportion exceeds 50% by weight, on the other hand, aggregation of the particles is accelerated, resulting in that the dispersion loses transparency, which is undesirable.

Examples of a basic substance (dispersant) in the water dispersion of the core-shell type tetragonal titanium oxide solid solution as above include ammonia, lithium hydroxide, sodium hydroxide, potassium hydroxide, cesium hydroxide, monolithium dihydrogenphosphate, monosodium dihydrogenphosphate, monopotassium dihydrogenphosphate, monocesium dihydrogenphosphate, dilithium hydrogenphosphate, disodium hydrogenphosphate, dipotassium hydrogenphosphate, dicesium hydrogenphosphate, trilithium phosphate, trisodium phosphate, tripotassium phosphate, tricesium phosphate, lithium hydrogen carbonate, sodium hydrogen carbonate, potassium hydrogen carbonate, cesium hydrogen carbonate, lithium carbonate, sodium carbonate, potassium carbonate, and cesium carbonate. Among these, particularly preferred are ammonia and sodium hydroxide. The amount of the basic substance used as the dispersant is preferably up to 1% by weight.

The colloidal solution of the core-shell type tetragonal titanium oxide solid solution configured as above has a high transparency. For instance, the transmittance of light having a wavelength of 550 nm transmitted through a quartz cell which is filled with a 1% by weight colloidal solution of the core-shell type tetragonal titanium oxide solid solution and which has an optical path length of 1 mm is normally at least 80%, preferably at least 85%, and further preferably at least 90%. Note that such a transmittance can be easily determined by measurement of UV-visible transmission spectrum.

Particularly, a colloidal solution of the core-shell type tetragonal titanium oxide solid solution containing a foreign element or elements dissolved therein which is prepared by the following preparation method is characterized as follows. Notwithstanding the solid solution is obtained without performing such mechanical unit operation as pulverization or classification in the preparation process, the specific particle diameter based on the cumulative particle size distribution as aforementioned can be ensured. Therefore, the production efficiency is very high. In addition, the aforementioned high transparency can be obtained securely. Furthermore, aggregation of the particles does not occur in any of the subsequent steps (B) to (E).

A method for preparing the water dispersion of the core-shell type tetragonal titanium oxide solid solution containing a foreign element or elements dissolved therein configured as above includes the following steps ($\alpha$) and ($\beta$).

Step ($\alpha$)

In this step, first, a water dispersion of tetragonal titanium oxide solid solution microparticles containing a foreign element component dissolved in tetragonal titanium oxide is provided. The method for obtaining this water dispersion is not particularly limited. However, it is preferable to use a method in which a titanium compound as raw material, a foreign element compound, a basic substance and hydrogen peroxide are reacted in an aqueous dispersion medium, to once obtain a peroxotitanic acid solution containing the foreign element, and the solution is hydrothermally treated to obtain a dispersion of the tetragonal titanium oxide microparticles containing the foreign element dissolved therein.

The reactions at an early stage until the foreign element-containing peroxotitanic acid solution is obtained may be effected by a method in which the basic substance is added to the raw material titanium compound in the aqueous dispersion medium to form titanium hydroxide, impurity ions contained in the reaction system are removed, hydrogen peroxide is added to the reaction system to produce peroxotitanic acid, and thereafter the foreign element compound is added, to obtain the foreign element-containing peroxotitanic acid solution. Alternatively, the reactions at the former stage may be effected by a method in which the foreign element compound is added to the raw material titanium compound in the aqueous dispersion medium, thereafter the basic substance is added to form foreign element-containing titanium hydroxide, impurity ions contained in the reaction system are removed, and hydrogen peroxide is added, to obtain a foreign element-containing peroxotitanic acid solution.

Here, examples of the titanium compound as raw material include: inorganic acid salts of titanium such as hydrochloride, nitrate, and sulfate of titanium; organic acid salts of titanium such as formate, citrate, oxalate, lactate, and glycolate of titanium; and titanium hydroxide precipitated through hydrolysis by adding an alkali to an aqueous solution of any of these titanium salts. These titanium compounds may be used either singly or in combination of two or more of them.

As the foreign element compound, there may be used the aforementioned foreign element salt or salts, particularly foreign element chloride or chlorides, in respective amounts for attaining the aforementioned contents in the solid solution. Besides, as the aqueous dispersion medium and the basic substance, the aforementioned respective ones are used in respective amounts to attain the aforementioned mixing ratios.

Hydrogen peroxide is used for convert the raw material titanium compound or titanium hydroxide to peroxotitanium, namely, a titanium oxide compound containing a Ti-O-O-Ti linkage, and is normally used in the form of hydrogen peroxide solution. The amount of hydrogen peroxide added is preferably 1.5 molar times to 10 molar times the total mole

of titanium and the foreign element(s). Besides, the reaction of converting the raw material titanium compound or titanium hydroxide into peroxotitanic acid by addition of hydrogen peroxide is carried out at a temperature of preferably 5°C to 60°C for a time of preferably 30 minutes to 24 hours.

The foreign element-containing peroxotitanic acid solution thus obtained may contain a basic substance or an acidic substance for pH adjustment. Examples of the basic substance usable in this instance include ammonia, whereas the acidic substance usable here include inorganic acids such as sulfuric acid, nitric acid, hydrochloric acid, carbonic acid, phosphoric acid, and hydrogen peroxide, as well as organic acids such as formic acid, citric acid, oxalic acid, lactic acid, and glycolic acid. In this case, it is preferable for the foreign element-containing peroxotitanic acid solution obtained to have a pH of 1 to 7, particularly 4 to 7, from the viewpoint of safety in handling of the solution.

Subsequently, the reaction at a later stage until the colloidal solution of the tetragonal titanium oxide microparticles containing the foreign element dissolved therein is obtained is carried out by a method in which the aforementioned foreign element-containing peroxotitanic acid solution is subjected to a hydrothermal reaction at a pressure of 0.01 MPa to 4.5 MPa, preferably 0.15 MPa to 4.5 MPa and a temperature of 80°C to 250°C, preferably 120°C to 250°C, for a time of 1 minute to 24 hours. As a result of the hydrothermal reaction, the foreign element-containing peroxotitanic acid is gradually converted into the tetragonal titanium oxide microparticles containing the foreign element dissolved therein.

In the present invention, the thus obtained dispersion of the tetragonal titanium oxide microparticles containing the foreign element dissolved therein is admixed with a monohydric alcohol, ammonia, and a tetraalkoxysilane such as tetraethoxysilane.

As the monohydric alcohol, there may be used methanol, ethanol, propanol, isopropyl alcohol, and an arbitrary mixture of them, among which particularly preferred is ethanol. Such a monohydric alcohol is mixed in an amount of up to 100 parts by weight, preferably up to 30 parts by weight, based on 100 parts by weight of the aforementioned dispersion of titanium oxide microparticles. In this case, the amount of the monohydric alcohol is preferably at least 5 parts by weight, particularly at least 10 parts by weight. Especially, by changing the amount of the monohydric alcohol used, it is possible to control the thickness of the silicon oxide shell to be formed on the outside of the core, which is composed of the tetragonal titanium oxide microparticle containing the foreign element dissolved therein, in the subsequent step. In general, an increase in the amount of the monohydric alcohol used increases the solubility of the silicon reactant such as tetraalkoxysilane in the reaction system, and, on the other hand, does not adversely affect the dispersed state of titanium oxide, so that the thickness of the shell formed is increased. In other words, the water dispersion of the core-shell type tetragonal titanium oxide solid solution containing the foreign element dissolved therein that is obtained in the subsequent step can be controlled to have a particle diameter in the aforementioned specific range based on cumulative particle size distribution, notwithstanding the absence of any mechanical unit operation such as pulverization or classification in the preparation process thereof. Accordingly, the water dispersion of the titanium oxide solid solution can impart transparency in the visible region to a paint in which it is used. While the amount of the monohydric alcohol to be used is preferably up to 30 parts by weight, even where the monohydric alcohol is used in an amount of more than 30 parts by weight it can be selectively removed in a concentrating step, by an operation appropriately added as required.

Ammonia used here is aqueous ammonia. In place of addition of aqueous ammonia, ammonia gas may be blown into the dispersion of the tetragonal titanium oxide microparticles containing the foreign element dissolved therein. Further, a reactant capable of generating ammonia in the dispersion may be added, in place of the addition of aqueous ammonia. The concentration of the aqueous ammonia used here is not particularly limited; thus, any of commercially available kinds of aqueous ammonia may be used. In the step in the present invention, for example, a 5% by weight aqueous ammonia is used, and the aqueous ammonia is preferably added until the pH of the dispersion of the tetragonal titanium oxide microparticles containing the foreign element dissolved therein is brought into the range of 7 to 12, more preferably 8 to 10.

As the tetraalkoxysilane, the aforementioned ones can be used, among which preferred is tetraethoxysilane. Not only tetraethoxysilane itself but also a (partial) hydrolyzates thereof can be used. Such tetraethoxysilane or (partial) hydrolyzates thereof to be used here may be any of those commercially available, examples of which include the trade name "KBE-04" (tetraethoxysilane, produced by Shin-Etsu Chemical Co., Ltd.), "Silicate 35" and "Silicate 45" (partial hydrolyzate condensate of tetraethoxysilane, produced by Tama Chemicals), and ESI40 and ESI48 (partial hydrolyzates of tetraethoxysilane, produced by Colcoat Co., Ltd.). These tetraethoxysilanes may be used either singly or in combination of two or more of them.

Tetraethoxysilane is used in an amount of 5% to 50% by weight, preferably 10% to 45% by weight, and more preferably 20% to 40% by weight, based on the titanium oxide containing the silicon oxide after the hydrolysis. If the amount of tetraethoxysilane is less than 5% by weight, the shell is formed insufficiently. If the amount is more than 50% by weight, aggregation of the particles is accelerated, possibly causing the dispersion to loose transparency.

The method for adding the monohydric alcohol, ammonia and the tetraalkoxysilane such as tetraethoxysilane to the dispersion of the tetragonal titanium oxide microparticles containing the foreign element dissolved therein and mixing them is not particularly restricted. For instance, magnetic stirring, mechanical agitation, and shaking agitation can be used.

Step (β)

Here, the mixture obtained in Step (α) above is rapidly heated, to form the core-shell type tetragonal titanium oxide solid solution microparticles in which a core is composed of the tetragonal titanium oxide microparticle containing the foreign element dissolved therein and a shell surrounding the core is composed of silicon oxide.

The method for rapidly heating the mixture obtained Step (β) may be any of the existing rapid heating methods, examples of which include microwave heating, the use of a microreactor capable of achieving a high heat exchange efficiency, and heat exchange with an external heat source having a high heat capacity. Among these heating methods, microwave heating is particularly preferred because uniform and rapid heating can be achieved thereby. It is to be noted here that the process of heating by irradiation with microwaves may be a batch process or a continuous process.

The rapid heating method is preferably so conducted that the temperature being raised from room temperature reaches a temperature immediately below the dispersion's boiling point of the dispersion medium (normally, about 10°C to 80°C) within a period of time of 10 minutes. If the heating method is such that the period is longer than 10 minutes, aggregation of the particles would take place, which is undesirable.

In the case of using microwave heating as the rapid heating method, the microwave can be appropriately selected from electromagnetic waves having a frequency in the range of 300 MHz to 3 THz, for example. In Japan, normally usable microwave frequency is prescribed to be 2.45 GHz, 5.8 GHz, and 24 GHz by the Radio Law. Among others, the frequency of 2.45 GHz is often used for home applications as well, and an oscillating magnetron with this frequency is advantageous on an equipment cost basis. This criterion, however, depends on the law or regulations and economic conditions in a specified country or region, and, therefore, the frequency of the microwave to be used is not limited on a technical basis. Any of commercially available apparatuses can be used so far as it has a microwave output rating of 100 W to 24 kW, preferably 100 W to 20 kW. Examples of such apparatus usable for microwave heating include μReactor Ex (produced by Shikoku Instrumentation Co., Ltd.), and Advancer (produced by Biotage Japan Ltd.).

In order to ensure that the heating time in the microwave heating is within 10 minutes, it is sufficient to appropriately control the microwave output, to appropriately control the amount of reaction mixture in the case of a batch reaction process, or appropriately control the flow rates of reactants in the case of a continuous reaction process.

The colloidal solution of the core-shell type tetragonal titanium oxide solid solution containing the foreign element ($M^0$) dissolved therein that is obtained in this manner can be used in the present invention.

<u>Step (B)</u>

Step (B) is a step of reacting the aforementioned water dispersion with a silicon compound to obtain a reaction mixture. It is preferable in this case to add a silane compound represented by the following general formula (1):

$$R^1_pR^2_qR^3_rSi(OR^4)\ 4\text{-}p\text{-}q\text{-}r \qquad (1)$$

wherein $R^1$, $R^2$, $R^3$, $R^4$, p, q, and r are as defined above and/or a (partial) hydrolyzate condensate thereof.

Specific examples of the silane compound represented by the general formula (1) wherein p = 1 and q = r = 0 include: hydrogentrimethoxysilane, hydrogentriethoxysilane, methyltrimethoxysilane, methyltriethoxysilane, methyltriisopropoxysilane, ethyltrimethoxysilane, ethyltriethoxysilane, ethyltriisopropoxysilane, propyltrimethoxysilane, propyltriethoxysilane, propyltriisopropoxysilane, phenyltrimethoxysilane, vinyltrimethoxysilane, allyltrimethoxysilane, γ-methacryloxypropyltrimethoxysilane, γ-methacryloxypropyltriethoxysilane, γ-acryloxypropyltrimethoxysilane, γ-glycidoxypropyltrimethoxysilane, γ-glycidoxypropyltriethoxysilane, β-(3,4-epoxycyclohexyl)ethyltrimethoxysilane, γ-chloropropyltrimethoxysilane, 3,3,3-trifluoropropyltrimethoxysilane, 3,3,3-trifluoropropyltriethoxysilane, perfluorooctylethyltrimethoxysilane, γ-mercaptopropyltrimethoxysilane, γ-aminopropyltrimethoxysilane, γ-aminopropyltriethoxysilane, N-(2-aminoethyl)aminopropyltrimethoxysilane, γ-isocyanatopropyltrimethoxysilane, γ-isocyanatopropyltriethoxysilane, tris(3-trimethoxysilylpropyl) isocyanurate in which isocyanate groups are linked together, tris(3-triethoxysilylpropyl) isocyanurate, a partial hydrolytic condensate of methyltrimethoxysilane (trade names: "KC-89S" and "X-40-9220," produced by Shin-Etsu Chemical Co., Ltd.), and a partial hydrolytic condensate of methyltrimethoxysilane and γ-glycidoxypropyltrimethoxysilane (trade name: "X-41-1056," produced by Shin-Etsu Chemical Co., Ltd.).

Specific examples of the silane compound represented by the general formula (1) wherein p = 1 and q = r = 0 and wherein $R^1$ is a polydimethylsiloxane, include compounds represented by the general formula (2) set forth below. In the general formula (2), n is preferably an integer of 0 to 50, more preferably an integer of 5 to 40, and still more preferably an integer of 10 to 30. If n exceeds 50, the property as a silicone oil is strengthened, thereby possibly limiting the solubility of the surface-treated organosol in various resins, which is undesirable. A compound of the general formula (2) wherein an average structure corresponds to n = 30 is available from Shin-Etsu Chemical Co., Ltd. under the trade name "X-24-9822." It is noted that Me represents methyl group.

General Formula (2):

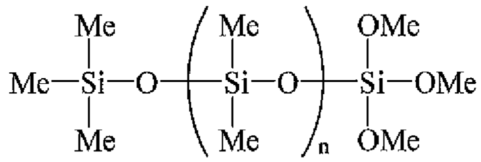 (2)

Specific examples of the silane compound represented by the above general formula (1) wherein p = 1, q = 1 and r = 0, include methylhydrogendimethoxysilane, methylhydrogendiethoxysilane, dimethyldimethoxysilane, dimethyldiethoxysilane, methylethyldimethoxysilane, diethyldimethoxysilane, diethyldiethoxysilane, methylpropyldimethoxysilane, methylpropyldiethoxysilane, diisopropyldimethoxysilane, phenylmethyldimethoxysilane, vinylmethyldimethoxysilane, γ-glycidoxypropylmethyldimethoxysilane, γ-glycidoxypropylmethyldiethoxysilane, β-(3,4-epoxycyclohexyl)ethylmethyldimethoxysilane, γ-methacryloxypropylmethyldimethoxysilane, γ-methacryloxypropylmethyldiethoxysilane, γ-mercaptopropylmethyldimethoxysilane, γ-aminopropylmethyldiethoxysilane, and N-(2-aminoethyl)aminopropylmethyldimethoxysilane.

Specific examples of the silane compound represented by the above general formula (1) wherein p = 1, q = 1 and r = 1 include trimethylmethoxysilane, trimethylethoxysilane, triethylmethoxysilane, n-propyldimethylmethoxysilane, n-propyldiethylmethoxysilane, iso-propyldimethylmethoxysilane, iso-propyldiethylmethoxysilane, propyldimethylethoxysilane, n-butyldimethylmethoxysilane, n-butyldimethylethoxysilane, n-hexyldimethylmethoxysilane, n-hexyldimethylethoxysilane, n-pentyldimethylmethoxysilane, n-pentyldimethylethoxysilane, n-hexyldimethylmethoxysilane, n-hexyldimethylethoxysilane, n-decyldimethylmethoxysilane, and n-decyldimethylethoxysilane.

The amount of the silicon compound added in Step (B) is preferably 30% to 200% by weight, more preferably 50% to 150% by weight, and further preferably 60% to 120% by weight, based on the solids in the inorganic oxide colloidal water dispersion in Step (A). If the addition amount is more than 200% by weight, gelation may take place. If the addition amount is less than 30% by weight, aggregation of the particles may occur.

The method of adding the silicon compound to the dispersion in Step (B) can be direct dropwise addition to the reaction mixture, indirect dropwise addition via a part outside the dispersion, or portion addition. Preferably, the silicon compound is added dropwise directly to the dispersion.

The liquid temperature at the time of addition of the silicon compound to the dispersion (liquid) in Step (B) is preferably 0°C to 45°C, more preferably 5°C to 40°C, and still more preferably 10°C to 35°C. When the liquid temperature is below 0°C, the inorganic oxide colloidal water dispersion may be denatured through a state change due to freezing, which is undesirable. When the liquid temperature is above 45°C, the silane added to the dispersion may bring about an unexpected hydrolytic condensation reaction. In Step (B), the temperature of the reaction mixture may rise, due to hydrolytic condensation, to reach a temperature which does not exceed 70°C. Step (B) can be carried out using an appropriate reaction catalyst.

Step (C)

Step (C) is a step of diluting the reaction mixture with an organic solvent as required. Examples of the organic solvent which can be preferably used in this instance include: monohydric alcohols such as methanol, ethanol, isopropyl alcohol, and butanol; polyhydric alcohols such as ethylene glycol, propylene glycol, and glycerin; ethers such as propylene glycol monomethyl ether, ethylene glycol monomethyl ether, glyme, and diglyme; ketones such as acetone, and methyl isobutyl ketone; esters such as ethyl acetate, and propylene glycol monomethyl ether acetate; and reactive esters such as hexanediol diacrylate, trimethylolpropane triacrylate, pentaerythritol tetraacrylate, and dipentaerythritol hexaacrylate. Among these, particularly preferred are ethanol and isopropyl alcohol. The dilution is preferably carried out for avoiding solvent shock in next step (D) and step (E) after the next, but it is not indispensable. The dilution factor is preferably in the range of 2 to 20, more preferably 3 to 15, and further preferably 5 to 10. When the dilution factor is less than 2, the solvent shock mitigating effect may be insufficient. When the dilution factor is more than 20, it may take long to carry out steps (D) and (E).

Step (D)

Step (D) is a step of obtaining a concentrated dispersion by concentration. The concentration can be achieved by such a unit operation as concentration by heating, and ultrafiltration. The concentration by heating is preferably carried out under a reduced pressure. The pressure in this case is preferably 1 mmHg to 760 mmHg, more preferably 5 mmHg to 300 mmHg. When the pressure is below 1 mmHg, bumping of dispersion medium may occur, which is undesirable.

When the pressure is above 760 mmHg, on the other hand, efficiency of evaporation may be low, which is undesirable. The heating can be selected from heat transfer by conduction, heat transfer by induction, and heat transfer by radiation. The heating is preferably carried out through heat transfer by radiation, using microwaves. The ultrafiltration can be performed using a membrane having an appropriate pore diameter. Examples of the ultrafiltration membrane (apparatus) usable for this purpose include those which are commercially available, such as Amicon Ultra (produced by Merck Millipore Corporation), Microza (produced by Asahi Kasei Chemicals Corporation), Ultrafilter Q0100 (produced by Advantec Toyo Kaisha, Ltd.), Ultrafilter P0200 (produced by Advantec Toyo Kaisha, Ltd.), Ultrafilter Q0500 (produced by Advantec Toyo Kaisha, Ltd.), Ultrafilter Q2000 (produced by Advantec Toyo Kaisha, Ltd.), Krauss-Maffei DCF crossflow filter (produced by ANDRITZ KMPT GmbH), and MEMBRALOX (produced by Noritake Co., Ltd.). The molecular cutoff in ultrafiltration is preferably 10 kDa to 300 kDa, more preferably 50 kDa to 200 kDa, and still more preferably 70 kDa to 150 kDa. The average pore diameter of the ultrafiltration membrane is preferably 5 nm to 30 nm, more preferably 5 nm to 20 nm, and further preferably 6 nm to 15 nm. The ultrafiltration is preferably conducted under application of pressure. The pressure applied in this case, in gauge pressure, is preferably 0.01 MPa to 1.0 MPa, more preferably 0.03 MPa to 0.5 MPa, and still more preferably 0.05 MPa to 0.3 MPa. When the pressure is below 0.01 MPa, the efficiency of ultrafiltration may be poor. A pressure of at least 0.5 MPa can be selected so long as a pressure-resistant structure is secured. The application of pressure can also be achieved by use of a centrifugal force. Such a filtration apparatus as Amicon Ultra (produced by Merck Millipore Corporation) is preferable for use here because it is suitable for centrifugal pressure application. In the case of a centrifugal separator having a rotational radius of about 0.2 m, the centrifugal force is preferably offered by rotation at 100 rpm to 5,000 rpm, more preferably 200 rpm to 3,000 rpm, and further preferably 500 rpm to 2,000 rpm.

In Step (D), concentration can be performed, as required, by removal of the dispersion medium of the dispersion. In the dispersion medium, there can be contained the water contained in the water dispersion prepared in Step (A), the silicon compound and/or its hydrolyzate condensate added in Step (B) and/or the silicic acid ester-derived alcohols produced upon hydrolytic condensation, and the organic solvents added in Step (C). By leaching of the dispersion of such a composite system, the solids concentration of the dispersion is raised to a value in the range of preferably 1% to 30% by weight, more preferably 5% to 25% by weight, and still more preferably 10% to 20% by weight.

Step (E)

Step (E) is a step of performing solvent replacement with an organic solvent. Specific examples of such an organic solvent include: hydrocarbons having 5 to 30 carbon atoms, such as pentane, hexane, heptane, octane, nonane, decane, undecane, dodecane, tridecane, tetradecane, pentadecane, hexadecane, heptadecane, octadecane, nonadecane, icosane, eicosane, docosane, triicosane, tetraicosane, pentaicosane, hexaicosane, heptaicosane, octaicosane, nonaicosane, triacontane, benzene, toluene, o-xylene, m-xylene, p-xylene, and mixtures containing these hydrocarbons, such as petroleum ether, kerosene, ligroin, and nujol; monohydric and polyhydric alcohols such as methanol, ethanol, 1-propanol, 2-propanol, cyclopentanol, ethylene glycol, propylene glycol, β-thiadiglycol, butylene glycol, and glycerin; ethers such as diethyl ether, dipropyl ether, cyclopentyl methyl ether, ethylene glycol dimethyl ether, diethylene glycol dimethyl ether, triethylene glycol dimethyl ether, ethylene glycol monomethyl ether, ethylene glycol monoethyl ether, ethylene glycol monopropyl ether, ethylene glycol monobutyl ether, propylene glycol monomethyl ether, propylene glycol monoethyl ether, propylene glycol monopropyl ether, propylene glycol monobutyl ether, butylene glycol monomethyl ether, butylene glycol monoethyl ether, butylene glycol monopropyl ether, and butylene glycol monobutyl ether; esters such as methyl formate, ethyl formate, propyl formate, butyl formate, methyl acetate, ethyl acetate, propyl acetate, butyl acetate, methyl propionate, ethyl propionate, propyl propionate, butyl propionate, methyl butyrate, ethyl butyrate, propyl butyrate, butyl butyrate, methyl benzoate, ethyl benzoate, propyl benzoate, butyl benzoate, dimethyl oxalate, diethyl oxalate, dipropyl oxalate, dibutyl oxalate, dimethyl malonate, diethyl malonate, dipropyl malonate, dibutyl malonate, ethylene glycol diformate, ethylene glycol diacetate, ethylene glycol dipropionate, ethylene glycol dibutyrate, propylene glycol diacetate, propylene glycol dipropionate, propylene glycol dibutyrate, ethylene glycol methyl ether acetate, propylene glycol methyl ether acetate, butylene glycol monomethyl ether acetate, ethylene glycol ethyl ether acetate, propylene glycol ethyl ether acetate, and butylene glycol monoethyl ether acetate; ketones such as acetone, diacetone alcohol, diethyl ketone, methyl ethyl ketone, methyl isobutyl ketone, methyl normal-butyl ketone, dibutyl ketone, cyclopentanone, cyclohexanone, cycloheptanone, and cyclooctanone; and amides such as dimethylformamide, dimethylacetamide, tetraacetylethylenediamide, tetraacetylhexamethylenetetramide, and N,N-dimethylhexamethylenediamine diacetate.

In step (E), besides, a reactive organic low-molecular (monomeric) substance can also be used as the organic solvent. Examples of such an organic low-molecular substance usable for this purpose include (meth)acrylates formed from (meth)acrylic acid and (polyhydric) alcohols, specific examples of which include: monoesters such as methyl methacrylate (abbreviated as MMA), methyl acrylate (abbreviated as MA), ethyl methacrylate, ethyl acrylate, hydroxyethyl acrylate (abbreviated as HEA), hydroxyethyl methacrylate (abbreviated as HEMA), hydroxypropyl acrylate, 4-hydroxybutyl acrylate, isobutyl acrylate, tert-butyl acrylate, n-octyl acrylate, isooctyl acrylate, isononyl acrylate, lauryl acrylate, stearyl acrylate, isostearyl acrylate, isonorbornyl acrylate, tetrahydrofurfuryl acrylate, (methoxyethyl) acrylate, methoxypolyethylene glycol acrylate, (2-methyl-2-ethyl-1,3-dioxsolan-4-yl) acrylate, [{cyclohexanespiro-2-(1,3-dioxolan-4-yl)} methyl] acrylate, and {(3-ethyloxetan-3-yl)methyl} acrylate; diesters such as ethylene glycol diacrylate, propylene glycol diacrylate, butanediol diacrylate, pentanediol diacrylate, hexanediol diacrylate, heptanediol diacrylate, octanediol diacrylate, nonanediol diacrylate, decanediol diacrylate, glycerin-1,2-diacrylate, glycerin-1,3-diacrylate, pentaerythritol diacrylate, 2-hydroxy-3-acryloyloxypropyl methacrylate, tricyclodecanedimethanol diacrylate, dipropyleneglycol diacrylate, and tripropylene glycol diacrylate; polyvalent esters such as glycerin triacrylate, trimethylolpropane triacrylate, pentaerythritol triacrylate, dipentaerythritol triacrylate, ethoxylated isocyanuric acid triacrylate, ethoxylated glycerin triacrylate, ethoxylated trimethylolpropane triacrylate, pentaerythritol tetraacrylate, dipentaerythritol hexaacrylate, ditrimethylolpropane tetraacrylate, ethoxylated pentaerythritol tetraacrylate, trimethylolpropane trimethacrylate, trispentaerythritol octaacrylate, octa(3-acryloxypropylsilsesquioxane), 3-acryloxypropylsilsesquioxane oligomer, and acryloxypropylsilsesquioxane oligomer which can be substituted with a polydimethylsiloxane chain and/or a perfluoro(oxy)alkyl chain.

Step (E) can be preferably achieved by such a unit operation as concentration by heating, and ultrafiltration. The concentration by heating is preferably carried out under a reduced pressure. The pressure in this case is preferably 1 mmHg to 760 mmHg, more preferably 5 mmHg to 300 mmHg. When the pressure is below 1 mmHg, bumping of dispersion medium may occur, which is undesirable. When the pressure is above 760 mmHg, on the other hand, efficiency of evaporation may be low, which is undesirable. The heating can be selected from heat transfer by conduction, heat transfer by induction, and heat transfer by radiation. The heating is preferably carried out through heat transfer by radiation, using microwaves. The ultrafiltration can be performed using a membrane having an appropriate pore diameter. Examples of the ultrafiltration membrane (apparatus) usable for this purpose include those which are commercially available, such as Amicon Ultra (produced by Merck Millipore Corporation), Microza (produced by Asahi Kasei Chemicals Corporation), Ultrafilter Q0100 (produced by Advantec Toyo Kaisha, Ltd.), Ultrafilter P0200 (produced by Advantec Toyo Kaisha, Ltd.), Ultrafilter Q0500 (produced by Advantec Toyo Kaisha, Ltd.), Ultrafilter Q2000 (produced by Advantec Toyo Kaisha, Ltd.), Krauss-Maffei DCF crossflow filter (produced by ANDRITZ KMPT GmbH), and MEMBRALOX (produced by Noritake Co., Ltd.). The molecular cutoff in ultrafiltration is preferably 10 kDa to 300 kDa, more preferably 50 kDa to 200 kDa, and still more preferably 70 kDa to 150 kDa. The average pore diameter of the ultrafiltration membrane is preferably 5 nm to 30 nm, more preferably 5 nm to 20 nm, and further preferably 6 nm to 15 nm. The ultrafiltration is preferably conducted under application of pressure. The pressure applied in this case, in gauge pressure, is preferably 0.01 MPa to 1.0 MPa, more preferably 0.03 MPa to 0.5 MPa, and still more preferably 0.05 MPa to 0.3 MPa. When the pressure is below 0.01 MPa, the efficiency of ultrafiltration may be poor. A pressure of at least 0.5 MPa can be selected so long as a pressure-resistant structure is secured. The application of pressure can also be achieved by use of a centrifugal force. Such a filtration apparatus as Ammicon Ultra (produced by Merck Millipore Corporation) is preferable for use here because it is suitable for centrifugal pressure application. In the case of a centrifugal separator having a rotational radius of about 0.2 m, the centrifugal force is preferably offered by rotation at 100 rpm to 5,000 rpm, more preferably 200 rpm to 3,000 rpm, and further preferably 500 rpm to 2,000 rpm.

The amount of the organic solvent used in Step (E) is preferably 1 to 20 times by volume, more preferably 2 to 10 times by volume, and further preferably 3 to 8 times by volume, based on the capacity of filtration chamber. When the amount of the organic solvent is less than 1 time by volume, solvent replacement may be insufficient. When the amount is more than 20 times by volume, a situation which is undesirable from the viewpoint of industrial efficiency may be generated.

In the preparation method in this invention, a dehydration step (F) and a surface treatment step (G) may further be added, as required. In the dehydration step (F), the water concentration obtained is preferably up to 1,000 ppm, more preferably up to 500 ppm, further preferably up to 100 ppm, and most preferably up to 10 ppm.

Step (F) can be carried out by physical adsorption using a zeolite having a pore diameter of preferably 3 Å to 10 Å and/or by a method involving a chemical reaction conducted using an ortho organic acid ester or a gem-dialkoxyalkane represented by the following general formula (6):

$$(R^{11}O)\ (R^{12}O)\ CR^{13}R^{14} \qquad (6)$$

wherein $R^{11}$ and $R^{12}$ are substituent groups which are each independently a hydrocarbon having 1 to 10 carbon atoms and which can be linked together to form a ring, and $R^{13}$ and $R^{14}$ are substituent groups which are each independently a hydrocarbon having 1 to 10 carbon atoms and which can be linked together to form a ring.

Examples of a substance usable as the zeolite include those having such chemical composition as $K_4Na_4[Al_8Si_8O_{32}]$, $Na[AlSi_2O_6]$, $Na_2[Al_2Si_7O_{18}]$, $(K,Ba,Sr)_2Sr_2Ca_2$ $(Ca,Na)_4[Al_{18}Si_{18}O_{72}]$, $Li[AlSi_2O_6]O$, $Ca_8Na_3$ $[Al_{19}Si_{77}O_{192}]$, $(Sr,Ba)_2$ $[Al_4Si_{12}O_{32}]$, $(Ca_{0.5},Na,K)_4[Al_4Si_8O_{24}]$, CaMn $[Be_2Si_5O_{13}(OH)_2]$, $(Na,K,Ca_{0.5},Sr_{0.5},Ba_{0.5},Mg_{0.5})_6[Al_6Si_{30}O_{72}]$, $Ca[Al_2Si_3O_{10}]$, $(Ca_{0.5},Na,K)_{4-5}[Al_{4-5}Si_{20-19}O_{48}]$, $Ba[Al_2Si_3O_{10}]$, $(Ca,Na_2)[Al_2Si_4O_{12}]$, $K_2(Na,Ca_{0.5})_8[Al_{10}Si_{26}O_{72}]$, $(Na,Ca_{0.5},Mg_{0.5},K)_z[Al_zSi_{12-z}O_{24}]$, $(K,Na,Mg_{0.5},Ca_{0.5})_6[Al_6Si_{30}O_{72}]$,

$NaCa_{2.5}[Al_6Si_{10}O_{32}]$, $Na_4[Zn_2Si_7O_{18}]$, $Ca[Al_2Si_2O_8]$, $(Na_2,Ca,K_2)_4[Al_8Si_{16}O_{48}]$, $Na_5[Al_5Si_{11}O_{22}]$, $(Na,Ca)_{6-8}[(Al,Si)_{20}O_{40}]$, $Ca[Al_2Si_6O_{16}]$, $Na_3Mg_3Ca_5[Al_{19}Si_{117}O_{272}]$, $(Ba_{0.5},Ca_{0.5},K,Na)_5$ $[Al_5Si_{11}O_{32}]$, $(Ca_{0.5},Sr_{0.5},Ba_{0.5},Mg_{0.5},Na,K)_9[Al_9Si_{27}O_{72}]$, $Li_2Ca_3[Be_3Si_3O_{12}]F_2$, $K_6[Al_4Si_6O_{20}]B(OH)_4Cl$, $Ca_4[Al_8Si_{16}O_{48}]$, $K_4Na_{12}[Be_8Si_{28}O_{72}]$, $(Pb_7Ca_2)[Al_{12}Si_{36}(O,OH)_{100}]$, $(Mg_{2.5}K_2Ca_{1.5})[Al_{10}Si_{26}O_{72}]$, $K_5Ca_2[Al_9Si_{23}O_{64}]$, $Na_{16}Ca_{16}[Al_{48}Si_{72}O_{240}]$, $K_9[Al_9Si_{23}O_{64}]$, $(Na_2,Ca,K_2)_4[Al_8Si_{40}O_{96}]$, $Na_3Ca_4[Al_{11}Si_{85}O_{192}]$, $Na_2[Al_2Si_3O_{10}]$, $CaKMg[Al_5Si_{13}O_{36}]$, $(Ca_{5.5}Li_{3.6}K_{1.2}Na_{0.2})Li_8[Be_{24}P_{24}O_{96}]$, $Ca_2[Al_4Si_4O_{15}(OH)_2]$, $(K,Ca_{0.5},Na,Ba_{0.5})_{10}[Al_{10}Si_{32}O_{84}]$, $K_9Na(Ca,Sr)[Al_{12}Si_{24}O_{72}]$, $(K,Na,Ca_{0.5},Ba_{0.5})_z$ $[Al_zSi_{16-z}O_{32}]$, $(Cs,Na)[AlSi_2O_6]$, $Ca_2[Be(OH)_2Al_2Si_4O_{13}]$, $Ca[Al_2Si_3O_{10}]$, $Ca[Al_2Si_7O_{18}]$, $(Ca_{0.5},Na,K)_9[Al_9Si_{27}O_{72}]$, $NaCa[Al_3Si_{17}O_{40}]$, $Ca_2Na[Al_5Si_5O_{20}]$, $Ca[Al_2Si_6O_{16}]$, $Ca_4(K_2,Ca,Sr,Ba)_3CU_3(OH)_8[Al_{12}Si_{12}O_{48}]$, Ca $[Al_2Si_4O_{12}]$, $Ca[Be_3(PO_4)_2(OH)_2]$, $K_zCa_{(1.5-0.5z)}[Al_3Si_3O_{12}]$, and $Ca[Al_2Si_6O_{16}]$ (where z is a real number of 0 to 1). Those substances of these chemical compositions which have a pore diameter of preferably 3 to 10 Å can be used. The pore diameter is preferably 3 to 10 Å, more preferably 4 to 8 Å, and further preferably 4 to 6 Å. When the pore diameter is less than 3 Å, it may be impossible to adsorb water sufficiently. When the pore diameter is more than 10 Å, it may take long to adsorb water.

As this kind of zeolite for dehydration, there can be used, for example, those which are commercially available under the respective names of Molecular Sieve 3A, Molecular Sieve 4A, Molecular Sieve 5A, Molecular Sieve 6A, Molecular Sieve 7A, Molecular Sieve 8A, Molecular Sieve 9A, Molecular Sieve 10A, Molecular Sieve 3X, Molecular Sieve 4X, Molecular Sieve 5X, Molecular Sieve 6X, Molecular Sieve 7X, Molecular Sieve 8X, Molecular Sieve 9X, and Molecular Sieve 10X, in their arbitrary combinations as required. More specifically, for instance, as an LTA type zeolite having a pore diameter of about 4 Å, the molecular sieve available from Kanto Chemical Co., Inc. under the product code "25958-08" can be used.

The zeolite is used in an amount of preferably 1% to 20% by weight, more preferably 2% to 15% by weight, and further preferably 5% to 10% by weight, based on the dispersion obtained in Step (E). When the amount of the zeolite is less than 1% by weight, it may be impossible to obtain a sufficient dehydrating effect. An amount of more than 20% by weight often does not offer a corresponding enhancement of the degree of dehydration, and, therefore, it is practically needless to use the zeolite in an amount exceeding 20% by weight.

Step (F) can also be carried out by a method involving a chemical reaction conducted using an ortho organic acid ester or a gem-dialkoxyalkane represented by the following general formula (6):

$$(R^{11}O)\ (R^{12}O)\ CR^{13}R^{14} \qquad (6)$$

wherein $R^{11}$, $R^{12}$, $R^{13}$, and $R^{14}$ are as defined above.

The ortho organic acid esters and the gem-dialkoxyalkanes each have an acetal skeleton in a molecular. An ortho organic acid ester is an acetal of an organic acid ester, and a gem-dialkoxyalkane is an acetal of a ketone. These compounds can be used for the purpose of dehydration, since an acetal has a property of reacting with water to be decomposed into an alcohol and a carbonyl compound. By the reaction, water is consumed, whereby the same effect as that of an addition of an organic solvent can be obtained.

Specific examples of such an ortho organic acid ester include methyl orthoformate, ethyl orthoformate, propyl orthoformate, butyl orthoformate, methyl orthoacetate, ethyl orthoacetate, propyl orthoacetate, butyl orthoacetate, methyl orthopropionate, ethyl orthopropionate, propyl orthopropionate, butyl orthopropionate, methyl orthobutyrate, ethyl orthobutyrate, propyl orthobutyrate, and butyl orthobutyrate.

Specific examples of the gem-dialkoxyalkane include acetone dimethyl acetal, acetone diethyl acetal, acetone dipropyl acetal, acetone dibutyl acetal, acetone ethylene glycol acetal, acetone propylene glycol acetal, methyl ethyl ketone dimethyl acetal, methyl ethyl ketone diethyl acetal, methyl ethyl ketone dipropyl acetal, methyl ethyl ketone dibutyl acetal, methyl ethyl ketone ethylene glycol acetal, methyl ethyl ketone propylene glycol acetal, methyl isobutyl ketone dimethyl acetal, methyl isobutyl ketone diethyl acetal, methyl isobutyl ketone dipropyl acetal, methyl isobutyl ketone dibutyl acetal, methyl isobutyl ketone ethylene glycol acetal, methyl isobutyl ketone propylene glycol acetal, cyclopentanone dimethyl acetal, cyclopentanone diethyl acetal, cyclopentanone dipropyl acetal, cyclopentanone dibutyl acetal, cyclopentanone ethylene glycol acetal, cyclopentanone propylene glycol acetal, cyclohexanone dimethyl acetal, cyclohexanone diethyl acetal, cyclohexanone dipropyl acetal, cyclohexanone dibutyl acetal, cyclohexanone ethylene glycol acetal, and cyclohexanone propylene glycol acetal.

In selecting a compound from among these acetal skeleton-possessing compounds, if there is a favorable compound or combination of compounds among the molecules which will be produced upon the reaction of the selected compounds with water, the selection (and the use of the selected compound) can be made in anticipation of the production of the favorable compound or compounds. For instance, in the case where it is intended to remove water from an organosol through replacement of the water with cyclohexanone and butanol, the purpose can be achieved by use of cyclohexanone dibutyl acetal.

The acetal skeleton-possessing compound is used in an amount of preferably 0.5% to 20% by weight, more preferably 2% to 15% by weight, and further preferably 5% to 10% by weight, based on the dispersion obtained in Step

(E). When the amount is less than 0.5% by weight, it may be impossible to obtain a sufficient dehydrating effect. An amount of more than 20% by weight often does not offer a corresponding enhancement of the degree of dehydration, and may produce an unexpected effect, such as causing etching upon mixing of the dispersion with a resin; therefore, it is practically needless to use the acetal skeleton-possessing compound in an amount exceeding 20% by weight.

In the surface treatment step (G), it is preferable to add a silane compound represented by the following general formula (1):

$$R^1_pR^2_qR^3_rSi(OR^4)_{4-p-q-r} \quad (1)$$

wherein $R^1$, $R^2$, $R^3$, $R^4$, p, q, and r are as defined above and/or a (partial) hydrolyzate condensate thereof.

Specific examples of the silane compound represented by the general formula (1) wherein p = 1 and q = r = 0 include: hydrogentrimethoxysilane, hydrogentriethoxysilane, methyltrimethoxysilane, methyltriethoxysilane, methyltriisopropoxysilane, ethyltrimethoxysilane, ethyltriethoxysilane, ethyltriisopropoxysilane, propyltrimethoxysilane, propyltriethoxysilane, propyltriisopropoxysilane, phenyltrimethoxysilane, vinyltrimethoxysilane, allyltrimethoxysilane, γ-methacryloxypropyltrimethoxysilane, γ-methacryloxypropyltriethoxysilane, γ-acryloxypropyltrimethoxysilane, γ-glycidoxypropyltrimethoxysilane, γ-glycidoxypropyltriethoxysilane, β-(3,4-epoxycyclohexyl)ethyltrimethoxysilane, γ-chloropropyltrimethoxysilane, 3,3,3-trifluoropropyltrimethoxysilane, 3,3,3-trifluoropropyltriethoxysilane, perfluorooctylethyltrimethoxysilane, γ-mercaptopropyltrimethoxysilane,γ -aminopropyltrimethoxysilane, γ-aminopropyltriethoxysilane, N-(2-aminoethyl)aminopropyltrimethoxysilane, γ-isocyanatopropyltrimethoxysilane, γ-isocyanatopropyltriethoxysilane, tris(3-trimethoxysilylpropyl) isocyanurate in which isocyanate groups are linked together, tris(3-triethoxysilylpropyl) isocyanurate, a partial hydrolytic condensate of methyltrimethoxysilane (trade names: "KC-89S" and '"X-40-9220,'" produced by Shin-Etsu Chemical Co., Ltd.), and a partial hydrolytic condensate of methyltrimethoxysilane and γ-glycidoxypropyltrimethoxysilane (trade name: "X-41-1056," produced by Shin-Etsu Chemical Co., Ltd.).

Specific examples of the silane compound represented by the general formula (1) wherein p = 1 and q = r = 0 and wherein $R^1$ is a polydimethylsiloxane, include compounds represented by the general formula (2) set forth below. In the general formula (2), n is preferably an integer of 0 to 50, more preferably an integer of 5 to 40, and still more preferably an integer of 10 to 30. If n exceeds 50, the property as a silicone oil is strengthened, thereby possibly limiting the solubility of the surface-treated organosol in various resins, which is undesirable. A compound of the general formula (2) wherein an average structure corresponds to n = 30 is available from Shin-Etsu Chemical Co., Ltd. under the trade name "X-24-9822." It is noted that Me represents methyl group.

General Formula (2):

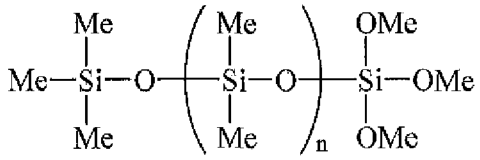

(2)

Specific examples of the silane compound represented by the above general formula (1) wherein p = 1, q = 1 and r = 0, include methylhydrogendimethoxysilane, methylhydrogendiethoxysilane, dimethyldimethoxysilane, dimethyldiethoxysilane, methylethyldimethoxysilane, diethyldimethoxysilane, diethyldiethoxysilane, methylpropyldimethoxysilane, methylpropyldiethoxysilane, diisopropyldimethoxysilane, phenylmethyldimethoxysilane, vinylmethyldimethoxysilane, γ-glycidoxypropylmethyldimethoxysilane, γ-glycidoxypropylmethyldiethoxysilane, β-(3,4-epoxycyclohexyl)ethylmethyldimethoxysilane, γ-methacryloxypropylmethyldimethoxysilane, γ-methacryloxypropylmethyldiethoxysilane, γ-mercaptopropylmethyldimethoxysilane, γ-aminopropylmethyldiethoxysilane, and N-(2-aminoethyl)aminopropylmethyldimethoxysilane.

Specific examples of the silane compound represented by the above general formula (1) wherein p = 1, q = 1 and r = 1 include trimethylmethoxysilane, trimethylethoxysilane, triethylmethoxysilane, n-propyldimethylmethoxysilane, n-propyldiethylmethoxysilane, iso-propyldimethylmethoxysilane, iso-propyldiethylmethoxysilane, propyldimethylethoxysilane, n-butyldimethylmethoxysilane, n-butyldimethylethoxysilane, n-hexyldimethylmethoxysilane, n-hexyldimethylethoxysilane, n-pentyldimethylmethoxysilane, n-pentyldimethylethoxysilane, n-hexyldimethylmethoxysilane, n-hexyldimethylethoxysilane, n-decyldimethylmethoxysilane, and n-decyldimethylethoxysilane.

## EXAMPLES

The present invention will be specifically described below by showing Synthesis Examples, Examples, and

Comparative Examples, but the invention is not limited to the Examples.

Example 1

A dispersion in ethanol of a titanium oxide solid solution (tin: 5 mol%, gallium: 1 mol%) having a silica shell was prepared by the following steps (A) to (E).

Step (A)

Step (α)

As a colloidal water dispersion of an inorganic oxide, there was prepared a dispersion wherein core-shell microparticles having a core composed of a titanium-oxide-tin-gallium composite oxide and a shell composed of silicon oxide were dispersed as a dispersoid in a dispersion medium composed of water. First, a dispersion containing titanium oxide microparticles for constituting the cores was prepared. Next, hydrolytic condensation of tetraethoxysilane was conducted, to obtain a colloidal solution containing the core-shell microparticles.

To 66.0 g of a 36% by weight aqueous titanium(IV) chloride solution (product name: "TC-36," produced by Ishihara Sangyo Kaisha, Ltd.), were added 2.2 g of tin(IV) chloride pentahydrate (produced by Wako Pure Chemical Industries Ltd.) and 0.33 g of gallium(III) sulfate (produced by Kojundo Chemical Laboratory Co., Ltd.), followed by sufficient mixing, and the resulting mixture was diluted with 1,000 g of ion-exchanged water. To the aqueous metallic salt solution mixture, 300 g of 5% by weight aqueous ammonia (produced by Wako Pure Chemical Industries Ltd.) was gradually added to perform neutralization and hydrolysis, thereby obtaining a precipitate of titanium hydroxide containing tin and gallium. The titanium hydroxide slurry in this instance had a pH of 8. The precipitate of titanium hydroxide thus obtained was subjected to a deionizing treatment by repeating an addition of ion-exchanged water and decantation. To the tin-containing titanium hydroxide precipitate thus deionized, 100 g of 30% by weight aqueous hydrogen peroxide (produced by Wako Pure Chemical Industries Ltd.) was gradually added, followed by stirring at 60°C for 3 hours for sufficient progress of reaction. Thereafter, pure water was added to the reaction mixture for concentration adjustment, to obtain a semi-transparent tin-containing peroxotitanic acid solution (solids concentration: 1% by weight). A 500-mL autoclave (product name: "TEM-D500," produced by Taiatsu Techno Corporation) was loaded with 350 mL of the peroxotitanic acid solution prepared as above, and the solution was subjected to a hydrothermal treatment at 200°C and 1.5 MPa for 120 minutes. Subsequently, the reaction mixture in the autoclave was discharged through a sampling pipe into a vessel held in a water bath set at 25°C, to rapidly cool the reaction mixture and stop the reaction, thereby obtaining a titanium oxide dispersion.

Step (β)

A separable flask equipped with a magnetic rotor and a thermometer was loaded with 1,000 parts by weight of the titanium oxide dispersion obtained above, 100 parts by weight of ethanol, and 2.0 parts by weight of ammonia at room temperature (25°C), and the resulting mixture was magnetically stirred. The separable flask was immersed in an ice bath, to be cooled until the temperature of the contents was lowered to 5°C. After 18 parts by weight of tetraethoxysilane (product name: "KBE-04," produced by Shin-Etsu Chemical Co., Ltd.) was added to the separable flask, the flask was set in μReactor EX (produced by Shikoku Instrumentation Co., Ltd.), and, under irradiation with microwaves at a frequency of 2.45 GHz and an output of 1,000 W for 1 minute, the contents of the flask was magnetically stirred. During this operation, the thermometer was observed to confirm that the temperature of the contents of the flask reached 85°C. The mixture thus obtained was filtered through a qualitative filter paper (Advantec 2B), to obtain a dilute colloidal solution. The dilute colloidal solution was concentrated to 10% by weight through concentration by heating (50°C) under a reduced pressure (10 mmHg), to obtain a water dispersion of metallic oxide microparticles (A-1). For the thus obtained dispersion, the particle diameter corresponding to 50% in volume-based cumulative particle size distribution was determined by a dynamic light scattering method (apparatus name: "Nanotrac," produced by Nikkiso Co., Ltd.) to be 20 nm.

Step (B)

A 4-necked 2-L separable flask equipped with a Dimroth condenser tube, a nitrogen inlet pipe, a thermometer, and mechanical stirring vanes was loaded with 400 g of the water dispersion of metallic oxide microparticles (A-1 (solids content: 10% by weight)). To the flask was added 300 g of γ-glycidoxypropyltrimethoxysilane (product name: "KBM-13," produced by Shin-Etsu Chemical Co., Ltd.), and the admixture was vigorously stirred (200 rpm). It was observed that under the stirring, the dispersion and the alkoxysilane were brought into reaction with each other to become uniform. It was also observed that during this reaction, the temperature of the dispersion rose from 25°C to 52°C.

Step (C)

To the dispersion having been treated in Step (B), was added 1,500 g of ethanol with stirring (100 rpm), whereby the dispersion was diluted and a reaction mixture (X) was obtained.

Step (D)

A 10-mL portion of the reaction mixture (X) was put in an upper bucket of a centrifuging tube (trade name: "Amicon Ultra-15," produced by Merck Millipore Corporation; for use with 100,000 NMWL membrane) having ultrafiltration membrane. The centrifuging tube was rotated at 2,000 rpm for 15 minutes to perform centrifugal separation. Upon this operation, 9 mL of a clear liquid (Filtrate-0) observed leached into a lower bucket, whereas 1 mL of the concentrated liquid was observed left in the upper bucket (Step (D) in FIG. 1).

Step (E)

To the concentrated liquid (1 mL) obtained in Step (D), 9 mL of ethanol was added from the upper bucket, to effect re-slurrying (re-dispersion). A centrifuging tube filled with a total of 10 mL of the re-slurried dispersion was rotated at 2,000 rpm for 15 minutes to effect centrifugal separation. Upon this operation, 9 mL of a clear liquid (Filtrate-1) was observed leached into the lower bucket, whereas 1 mL of a concentrated liquid was observed left in the upper bucket. To the concentrated liquid (1 mL), 9 mL of ethanol was added from the upper bucket to effect re-slurrying (re-dispersion). A centrifuging tube filled with a total of 10 mL of the re-slurried dispersion was rotated at 2,000 rpm for 15 minutes to perform centrifugal separation. Upon this operation, 9 mL of a clear liquid (Filtrate-2) was observed leached into the lower bucket, whereas 1 mL of a concentrated liquid was observed left in the upper bucket. The same operation as above was repeated to obtain Filtrate-3 and Filtrate-4 (Step (E) in FIG. 1). For Filtrate-0 to Filtrate-4, solids concentration and water content (Karl-Fischer technique) were analyzed. The results are set forth in Table 1 below.

The liquid (1 mL) finally left in the upper bucket is the ethanol dispersion (Agent A-1) of titanium oxide solid solution (tin: 5 mol%, gallium: 1 mol%) having a silica shell. For the dispersion (Agent A-1), the particle diameter corresponding to 50% in volume-based cumulative particle size distribution was determined by a dynamic light scattering method (apparatus name: Nanotrac, produced by Nikkiso Co., Ltd.) to be 25 nm (FIG. 2). The solids content of the dispersion (Agent A-1) was analyzed to be 11% by weight. The water content of the dispersion (Agent A-1) was analyzed by a Karl-Fischer technique to be 0.8% by weight.

Table 1

| Filtrate No. | Filtrate-0 | Filtrate-1 | Filtrate-2 | Filtrate-3 | Filtrate-4 |
|---|---|---|---|---|---|
| Water content (wt%) | 12.0 | 8.4 | 6.1 | 2.2 | 0.9 |
| Solids content (wt%) | 7.5 | 4.3 | 2.8 | 0.9 | 0.1 |

Example 2

An ethanol dispersion of a titanium oxide solid solution (tin: 5 mol%, vanadium: 1 mol%) having a silica shell was prepared.

The same process as in Example 1 was conducted except for using 0.28 g of vanadium(IV) sulfate (produced by Shinko Chemical Co., Ltd.) in place of the gallium(III) sulfate used in Step (A) in Example 1, to obtain the ethanol dispersion (Agent A-2). For this dispersion (Agent A-2), the particle diameter corresponding to 50% in volume-based cumulative particle size distribution was determined by the dynamic light scattering method to be 18 nm. The solids content of the dispersion (Agent A-2) was measured to be 10% by weight, and the water content of the dispersion (Agent A-2) was determined by the Karl-Fischer technique to be 0.9% by weight.

Example 3

An ethanol dispersion of a titanium oxide solid solution (tin: 2 mol%, niobium: 0.5 mol%) having a silica shell was prepared.

The same process as in Example 1 was performed except for using tin(TV) chloride in an amount of 0.88 g and for using 0.17 g of niobium(V) chloride (produced by Wako Pure Chemical Industries Ltd.) in place of the gallium(III) sulfate used in Step (A) of Example 1, to obtain the ethanol dispersion (Agent A-3). For the dispersion (Agent A-3), the particle diameter corresponding to 50% in volume-based cumulative particle size distribution was determined by the

dynamic light scattering method to be 20 nm. The solids content of the dispersion (Agent A-3) was determined to be 11% by weight, and the water content of the dispersion (Agent A-3) was measured by the Karl-Fischer technique to be 0.8% by weight.

Example 4

An ethanol dispersion of a titanium oxide solid solution (tin: 10 mol%, tantalum: 1 mol%) having a silica shell was prepared.

The same process as in Example 1 was carried out except for using tin chloride in an amount of 4.4 g and for using 0.45 g of tantalum(V) chloride (produced by Wako Pure Chemical Industries Ltd.) in place of the gallium(III) sulfate used in Step (A) of Example 1, to obtain the ethanol dispersion (Agent A-4). For the dispersion (Agent A-4), the particle diameter corresponding to 50% in volume-based cumulative particle size distribution was determined by the dynamic light scattering method to be 16 nm. The solids content of the dispersion (Agent A-4) was measured to be 10% by weight, and the water content of the dispersion (Agent A-4) was determined by the Karl-Fischer technique to be 0.8% by weight.

Example 5

An ethanol dispersion of a titanium oxide solid solution (tin: 5 mol%, zirconium: 10 mol%) having a silica shell was prepared.

The same process as in Example 1 was conducted except for using 2.92 g of zirconium(IV) chloride (produced by Wako Pure Chemical Industries Ltd.) in place of the gallium(III) sulfate used in Step (A) of Example 1, to obtain the ethanol dispersion (Agent A-5). For the dispersion (Agent A-5), the particle diameter corresponding to 50% in volume-based cumulative particle size distribution was determined by the dynamic light scattering method to be 20 nm. The solids content of the dispersion (Agent A-5) was measured to be 11% by weight, and the water content of the dispersion (Agent A-5) was determined by the Karl-Fischer technique to be 0.9% by weight.

Example 6

An ethanol dispersion of a titanium oxide solid solution (tin: 5 mol%, aluminum: 2 mol%) having a silica shell was prepared.

The same process as in Example 1 was performed, except for using 0.33 g of aluminum(III) chloride (produced by Wako Pure Chemical Industries Ltd.) in place of the gallium(III) sulfate used in Step (A) of Example 1, to obtain the ethanol dispersion (Agent A-6). For the dispersion (Agent A-6), the particle diameter corresponding to 50% in volume-based cumulative particle size distribution was measured by the dynamic light scattering method to be 20 nm. The solids content of the dispersion (Agent A-6) was determined to be 10% by weight, and the water content of the dispersion (Agent A-6) was measured by the Karl-Fischer technique to be 0.8% by weight.

Comparative Example 1

An ethanol dispersion of a titanium oxide solid solution (containing 5 mol% of tin dissolved therein) having a silica shell was prepared.

The same process as in Example 1 was carried out, except for not adding the gallium sulfate which had been added in Step (A) of Example 1, to obtain the ethanol dispersion (Agent A-R1). For the dispersion (Agent A-R1), the particle diameter corresponding to 50% in volume-based cumulative particle size distribution was determined by the dynamic light scattering method to be 14 nm. The solids content of the dispersion (Agent A-R1) was measured to be 10% by weight, and the water content of the dispersion (Agent A-R1) was determined by the Karl-Fischer technique to be 0.9% by weight.

Comparative Example 2

An ethanol dispersion of a titanium oxide solid solution (containing 20 mol% of niobium dissolved therein) having a silica shell was prepared.

The same process as in Example 1 was conducted, except for omitting the addition of the tin chloride and the gallium sulfate added in Step (A) of Example 1 but, instead, adding 6.8 g of niobium(V) chloride, to obtain the ethanol dispersion (Agent A-R2). For this dispersion (Agent A-R2), the particle diameter corresponding to 50% in volume-based cumulative particle size distribution was determined by the dynamic light scattering method to be 23 nm. The solids content of the dispersion (Agent A-R2) was measured to be 11% by weight, and the water content of the dispersion (Agent A-R2) was determined by the Karl-Fischer technique to be 0.8% by weight.

Synthesis Example 1

Preparation of silicone coating composition (Agent B-1)

A 1-L flask equipped with a stirrer, a condenser, and a thermometer was loaded with 60 g of γ-glycidoxypropylmethyldiethoxysilane (product name: "KBE-402," produced by Shin-Etsu Chemical Co., Ltd.), 120 g of γ-glycidoxypropyltrimethoxysilane (product name: "KBM-403," produced by Shin-Etsu Chemical Co., Ltd.), and 120 g of tetraethoxysilane (product name: "KBE-04," produced by Shin-Etsu Chemical Co., Ltd.), and 80 g of 0.05N hydrochloric acid was added dropwise to the flask under cooling with ice. The dropwise addition was conducted over about 3 hours while the temperature inside the flask was kept to be up to 10°C. Then, 0.2 g of tris(acetylacetonato)aluminum(III) as a curing catalyst and 0.1 g of a polyether-modified silicone oil (product name: "KP-341," produced by Shin-Etsu Chemical Co., Ltd.) as a leveling agent were added to the flask. The resulting liquid was filtered through a filter paper (Advantec 2B). The thus obtained composition had a viscosity of 3.5 $mm^2/s$, and a weight average molecular weight measured by GPC analysis of 600. This composition is made to be a paint (Agent B-1).

Example 7

The titanium oxide dispersion (Agent A-1) was added to the silicone coating composition (Agent B-1). Specifically, Agent A-1 was added to Agent B-1 so that the amount of solids in Agent A-1 would be 40% by weight, 44% by weight, 47% by weight, 51% by weight, and 53% by weight, based on the amount of solids in Agent B-1, to obtain high-refractive-index paints A1B1-40, A1B1-44, A1B1-47, A1B1-51, and A1B1-53.

Examples 8 to 12

Each of the various titanium oxide dispersions (Agent A-2 to Agent A-6) was added to the silicone coating composition (Agent B-1). Specifically, each Agent A was added to Agent B-1 so that the amount of solids in Agent A would be 51% by weight based on the amount of solids in Agent B-1, to obtain high-refractive-index paints A2B1-51, A3B1-51, A4B1-51, A5B1-51, and A6B1-51.

Comparative Example 3

Each of the titanium oxide dispersions (Agent A-R1 and Agent A-R2) was added to the silicone coating composition (Agent B-1). Specifically, each Agent A was added to Agent B-1 so that the amount of solids in Agent A would be 51% by weight based on the amount of solids in Agent B-1, to obtain high-refractive-index paints AR1B1-51 and AR2B1-51.

[Formation of laminates]

Each of the high-refractive-index compositions prepared in Example 7, Example 8, and Comparative Example 3 was applied to an optical lens (NK-55, produced by YEWON OPTEC) by dip coating. The coated articles thus obtained was subjected to thermal curing of the coating at 120°C for 1 hour. On each lens thus provided thereon with a high-refractive-index coat, a sputtering film was formed by plasma CVD.

[Color tone change test on laminates]

For the laminates obtained above, yellow index (YI) was measured (300A, Nippon Denshoku). Each of the laminates was irradiated with UV rays (10 $mW/cm^2$) in vacuum (0.5 mmHg) for 5 hours, and then put again to YI measurement. For each of the laminates, the absolute value ($|\Delta YI|$) of a change in YI was evaluated. The value of $|\Delta YI|$ was less than 3 for A1B1-40, A1B1-44, A1B1-47, A1B1-51, A1B1-53, A2B1-51, A3B1-51, A4B1-51, A5B1-51, and A6B1-51. For AR1B1-51 and AR2B1-51, on the other hand, the value of $|\Delta YI|$ was more than 3, and the lenses appeared somewhat blue.

[Measurement of refractive index]

Each of the paints A1B1-40, A1B1-44, A1B1-47, A1B1-51, and A1B1-53 was applied to a silicon wafer (MW-6C(CZ-P), produced by Shin-Etsu Handotai Co., Ltd.) by spin coating (300 rpm). The coated articles thus obtained were put to thermal curing of the coating at 120°C for 1 hour. For each film on the surface of the wafer, refractive index was measured by use of an ellipsometer (apparatus name: "UVISEL," produced by Horiba, Ltd.). The relation between the

titanium oxide content of the coat and the refractive index of the coat is plotted in FIG. 3.

[Shelf stability of dispersions]

A commercially available titanium oxide dispersion (Optolake 1130Z, solids content: 30% by weight) produced by the same technology as disclosed in Patent Document (Japanese Patent No. 5255270) was provided. The titanium oxide dispersions (Agents A-1 to A-6) prepared in Examples 1 to 7 were concentrated to a concentration of 30% by weight. These dispersions were put in sample bottles, and were stored together at room temperature. It was found that Optolake 1130Z gelled in 1 month. On the other hand, Agents A-1 to A-6 remained fluid even after 1 month of storage, and could be used by addition to the paint (Agent B-1) without any problem.

INDUSTRIAL APPLICABILITY

According to the present invention, dispersions of titanium oxide microparticles are provided. The titanium oxide microparticle dispersions obtained according to the present invention can be used for various coating compositions, such coating compositions for refractive index control, antireflection coating compositions, UV-shielding coating compositions, CVD primers, and UV absorbers capable of being mixed with photocatalytic microparticles. The titanium oxide microparticle dispersions obtained according to the invention are excellent in shelf stability, and coating compositions using the dispersions show little change in color tone with time and are excellent in design properties. The excellent room-temperature stability and weatherability of the dispersions according to the present invention are applicable to manufacture of inexpensive optical lenses. The dispersions of the present invention are applicable not only to silicone coating compositions but also acrylsilicone coating compositions, acrylic coating compositions, melamine coating compositions, urethane coating compositions, acrylurethane coating compositions, epoxy coating compositions, paraffin coating compositions, and alkyd coating compositions.

## Claims

1. A dispersion in organic solvent of a core-shell type tetragonal titanium oxide solid solution in which a core is composed of a tetragonal titanium oxide microparticle containing at least one element ($M^0$) selected from the group consisting of gallium, vanadium, niobium, tantalum, zirconium, aluminum, and indium in the solid solution and containing tin in the solid solution, and a shell surrounding the core is composed of silicon oxide,
wherein the core-shell type solid solution has a particle diameter ($D_{50}$) corresponding to 50% in volume-based cumulative particle size distribution as measured by a dynamic light scattering method using a laser beam of up to 50 nm,
the amount of the tin component dissolved in the solid solution, expressed in molar ratio (Ti/Sn) of titanium to tin, is in the range from 10 to 1,000, and
the total amount of the ($M^0$) component dissolved in the solid solution, expressed in molar ratio ($Ti/M^0$) of titanium to ($M^0$), is in the range from 10 to 1,000.

2. The dispersion in organic solvent of the core-shell type tetragonal titanium oxide solid solution according to claim 1, wherein the weight ratio of silicon oxide constituting the shell to the total weight of the core-shell type tetragonal titanium oxide solid solution is in the range from 5% to 50% by weight.

3. The dispersion in organic solvent of the core-shell type tetragonal titanium oxide solid solution according to claim 1 or 2, which comprises a silicon compound represented by the following general formula (1):

$$R^1_pR^2_qR^3_rSi(OR^4)_{4-p-q-r} \quad (1)$$

wherein $R^1$ is a hydrogen atom, a substituted or unsubstituted monovalent hydrocarbon group having 1 to 20 carbon atoms, or a diorganosiloxy group having up to 50 silicon atoms, $R^2$, $R^3$, and $R^4$ are each independently an alkyl group having 1 to 6 carbon atoms, p is an integer of 1 to 3, q is an integer of 0, 1 or 2, r is an integer of 0, 1 or 2, and p + q + r is an integer of 1 to 3 or a (partial) hydrolyzate condensate thereof,
wherein the weight ratio of the silicon compound or (partial) hydrolyzate condensate thereof to the total weight of the core-shell type tetragonal titanium oxide solid solution is in the range from 5% to 50% by weight.

4. A coating composition comprising the dispersion in organic solvent of the core-shell type tetragonal titanium oxide solid solution according to any one of claims 1 to 3.

FIG.1

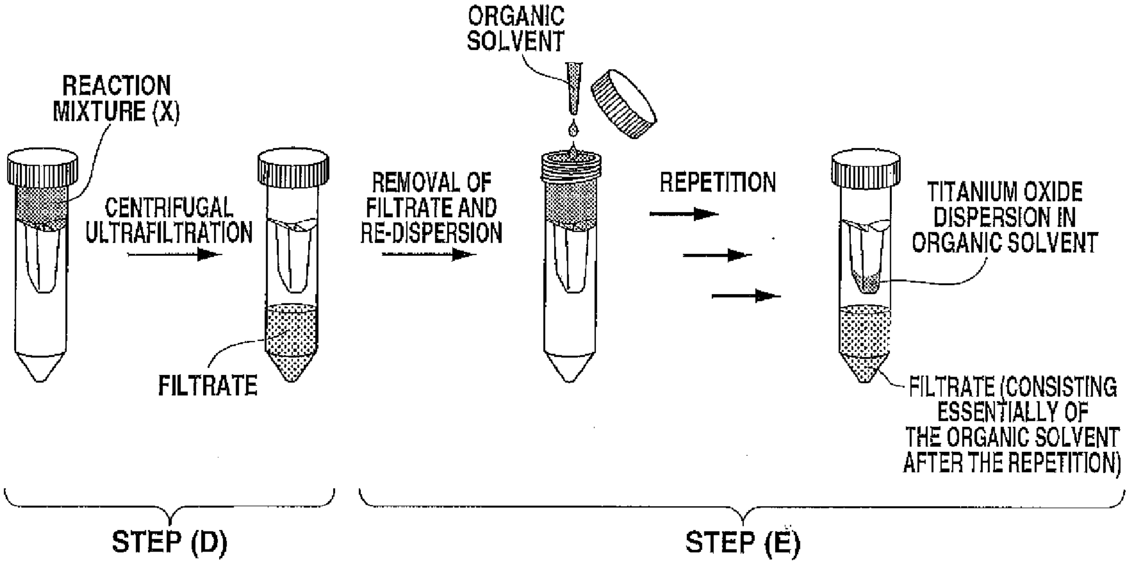
ORGANIC SOLVENT
REACTION MIXTURE (X)
CENTRIFUGAL ULTRAFILTRATION
REMOVAL OF FILTRATE AND RE-DISPERSION
REPETITION
TITANIUM OXIDE DISPERSION IN ORGANIC SOLVENT
FILTRATE
FILTRATE (CONSISTING ESSENTIALLY OF THE ORGANIC SOLVENT AFTER THE REPETITION)
STEP (D)
STEP (E)

FIG.2

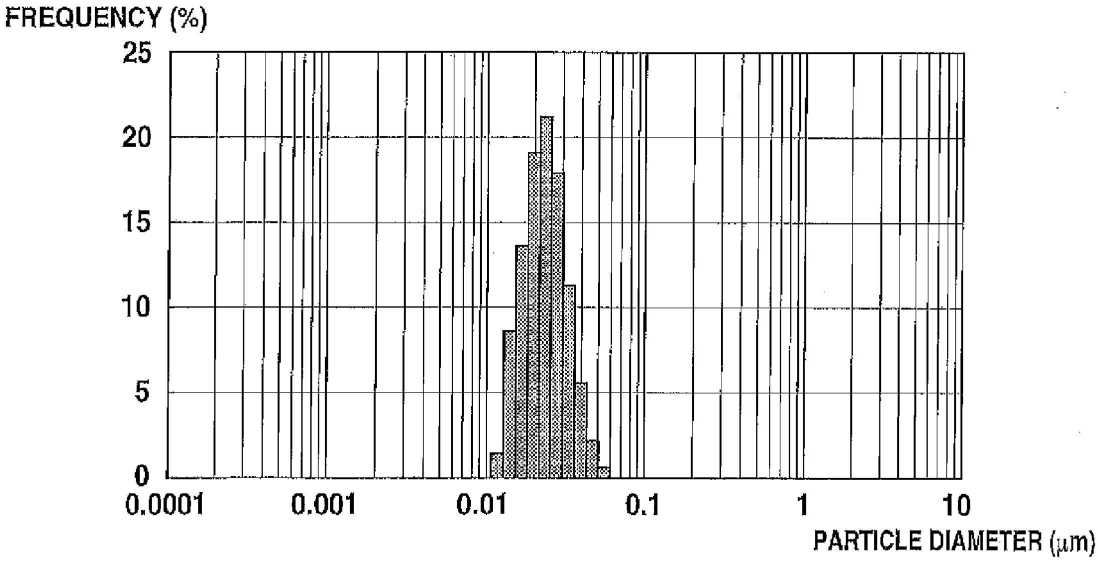
FREQUENCY (%)
25
20
15
10
5
0
0.0001
0.001
0.01
0.1
1
10
PARTICLE DIAMETER (μm)

FIG.3

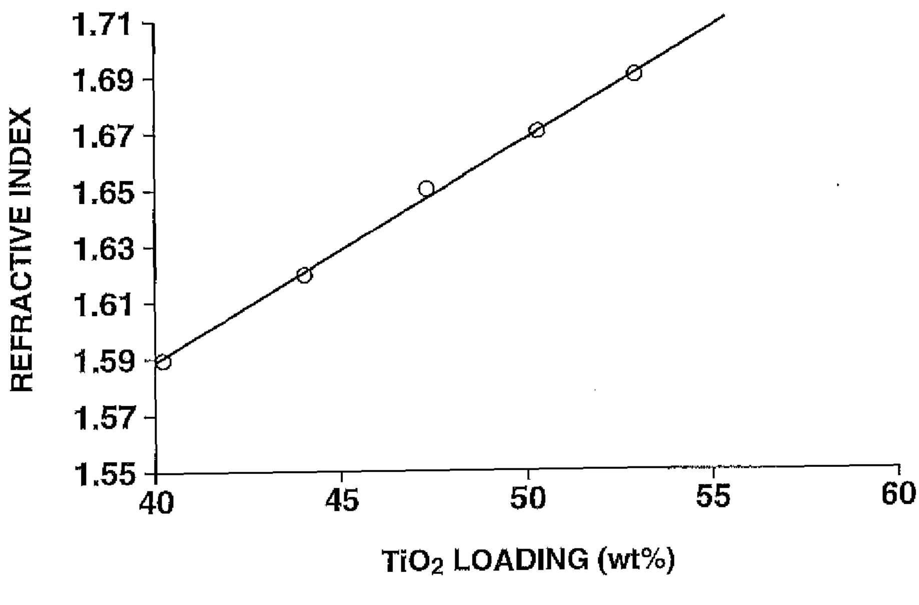
1.71
1.69
1.67
1.65
1.63
1.61
1.59
1.57
1.55
REFRACTIVE INDEX
40
45
50
55
60
TiO2 LOADING (wt%)

Europäisches Patentamt
European Patent Office
Office européen des brevets

# EUROPEAN SEARCH REPORT

Application Number
EP 15 16 8130

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | EP 2 933 230 A1 (SHINETSU CHEMICAL CO [JP]) 21 October 2015 (2015-10-21) * paragraphs [0018] - [0128]; claims 1-15; examples 1, comp. 4 * | 1-4 | INV. C01G23/047 C09C1/36 |
| Y | US 2014/023855 A1 (MASUDA KOHEI [JP] ET AL) 23 January 2014 (2014-01-23) * paragraphs [0076] - [0087], [0092] - [0122]; claims 1-10; examples Synth. 1, Comp. Synth. 4, Comp. 5; tables 1,2 * | 1-4 | |
| Y | EP 0 982 268 A1 (DOW CORNING [US]) 1 March 2000 (2000-03-01) * paragraphs [0008] - [0028]; claims 1-10 * | 1-4 | |
| A | EP 2 327 663 A1 (SHINETSU CHEMICAL CO [JP]) 1 June 2011 (2011-06-01) * paragraphs [0015] - [0028] * | 1-4 | |

TECHNICAL FIELDS SEARCHED (IPC)
C01G
C09C

The present search report has been drawn up for all claims

1

| Place of search | Date of completion of the search | Examiner |
|---|---|---|
| The Hague | 27 October 2015 | Corrias, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 15 16 8130

This annex lists the patent family members relating to the patent documents cited in the above-mentioned European search report.
The members are as contained in the European Patent Office EDP file on
The European Patent Office is in no way liable for these particulars which are merely given for the purpose of information.

27-10-2015

| Patent document cited in search report | Publication date | Patent family member(s) | Publication date |
|---|---|---|---|
| EP 2933230 A1 | 21-10-2015 | EP 2933230 A1 | 21-10-2015 |
| | | US 2015299417 A1 | 22-10-2015 |
| US 2014023855 A1 | 23-01-2014 | CN 103571255 A | 12-02-2014 |
| | | EP 2708513 A1 | 19-03-2014 |
| | | JP 5704133 B2 | 22-04-2015 |
| | | JP 2014019611 A | 03-02-2014 |
| | | KR 20140011959 A | 29-01-2014 |
| | | US 2014023855 A1 | 23-01-2014 |
| EP 0982268 A1 | 01-03-2000 | DE 69906895 D1 | 22-05-2003 |
| | | DE 69906895 T2 | 12-02-2004 |
| | | EP 0982268 A1 | 01-03-2000 |
| | | JP 4430164 B2 | 10-03-2010 |
| | | JP 2000080201 A | 21-03-2000 |
| | | US 6051672 A | 18-04-2000 |
| EP 2327663 A1 | 01-06-2011 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5255270 B


### Non-patent literature cited in the description


- *Organometallics,* 2008, vol. 27 (4), 500-502
- *J. Org. Chem.,* 1980, vol. 45, 1164
- *J. Org. Chem.,* 1999, vol. 64, 7707